(19) Europäisches Patentamt
European Patent Office
Office européen des brevets

(11) EP 3 805 277 A1

(12) EUROPEAN PATENT APPLICATION

(43) Date of publication:
**14.04.2021 Bulletin 2021/15**

(21) Application number: **20209538.6**

(22) Date of filing: **29.06.2017**

(51) Int Cl.:
***C08F 210/16** (2006.01)*
***C08F 4/651** (2006.01)*
***C08F 4/654** (2006.01)*
***C08F 4/655** (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 US 201662356866 P**

(62) Document number(s) of the earlier application(s) in accordance with Art. 76 EPC:
**17740532.1 / 3 478 730**

(71) Applicant: **Dow Global Technologies LLC**
**Midland, MI 48674 (US)**

(72) Inventors:
- **CHEN, Linfeng**
  **Freeport, TX 77547 (US)**
- **KARJALA, Teresa P.**
  **Freeport, TX 77541 (US)**
- **DEMIRORS, Mehmet**
  **Freeport, TX 77541 (US)**
- **GINGER, Douglas S.**
  **Freeport, TX 77541 (US)**
- **SPRINGS, Marc A.**
  **Freeport, TX 77541 (US)**

(74) Representative: **Boult Wade Tennant LLP**
**Salisbury Square House**
**8 Salisbury Square**
**London EC4Y 8AP (GB)**

Remarks:
This application was filed on 24-11-2020 as a divisional application to the application mentioned under INID code 62.

# (54) PROCATALYST COMPOSITIONS USEFUL FOR LOW COMONOMER INCORPORATION AND PROCESS FOR PREPARING THE SAME

(57) The invention relates to a procatalyst composition comprising a titanium moiety, a magnesium chloride support, a hydrocarbon solution in which the magnesium chloride support is formed, and an electron donor modifier having the formula (I):

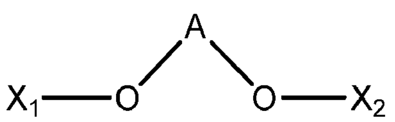

(I),

wherein:
A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom, wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

FIG. 1A

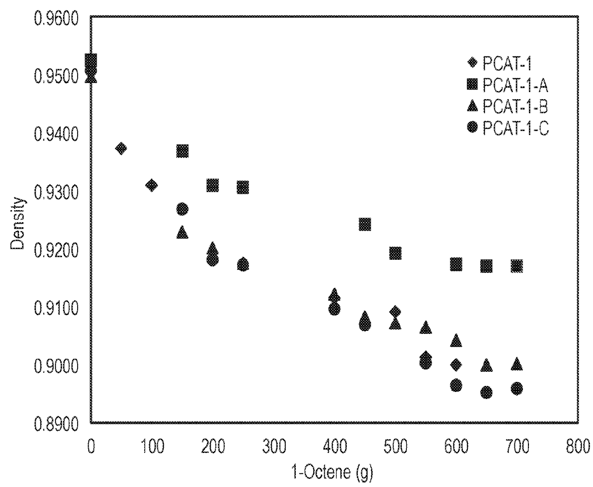


EP 3 805 277 A1

## Description

Field

Embodiments relate to procatalyst compositions useful for olefin polymerizations. More specifically, embodiments relate to solution process procatalyst compositions including electron donor modifiers, where the procatalyst compositions are useful for low comonomer incorporation in ethylene polymerization.

Introduction

Currently the demand for polyethylene worldwide is in excess of 80 million metric tons per year. Because there is a need for significant and continued differentiation of polymer products in the polyethylene business, researchers have devoted a great deal of effort to searching for process alterations that will yield such new products. One focus involves exploring new catalysts.

Ziegler-Natta catalysts remain the most extensively used catalysts in polyethylene (PE) production, including PE production by solution process. For solution process PE production that requires a linked reactor to produce a portion of polymer with high level of comonomer and another reactor to produce a portion of polymer with low level of comonomer, new catalysts with low comonomer incorporation capability are needed. A further reduction in comonomer incorporation would enhance the ability to increase the differences between those two portions of polymer in order to achieve property improvements for the overall polymer. However, the advancement in the solution process Ziegler-Natta PE catalysts has been limited over the last few decades. One of the major challenges facing catalyst development for the solution process is the harsh reaction environment due to the combination of high reactor temperature and the presence of highly reactive cocatalysts (e.g., triethylaluminum).

Accordingly, a need exists for new solution process Ziegler-Natta PE catalysts with low comonomer incorporation capabilities that are able to survive the harsh conditions of the solution process. A need also exists for a process for preparing these new catalysts that is not hindered by tedious, complex procedures such as purification of components or removal of excess components. Such a need would be met, for example, through a one-pot process for preparing the catalysts with no separation or purification of any component required.

Summary

In certain embodiments, the present disclosure relates to a procatalyst composition comprising a titanium moiety, a magnesium chloride support, a hydrocarbon solution in which the magnesium chloride support is formed, and an electron donor modifier having the formula (I):

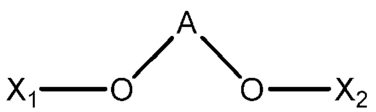

(I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,

wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure, and wherein $X_1$ and $X_2$ are not both hydrogen.

In certain embodiments, the present disclosure relates to a one-pot process for preparing the above described procatalyst composition. In some embodiments, the present disclosure relates to a solution process for polymerization of ethylene and at least one additional polymerizable monomer to form a polymer composition, the process comprising the steps of: contacting ethylene and the additional polymerizable monomer with a catalyst composition under polymerization conditions; wherein the catalyst composition comprises the above-described procatalyst composition and an alkyl-aluminum cocatalyst; wherein the additional polymerizable monomer is a $C_{3-20}$ $\alpha$-olefin; and wherein the procatalyst composition is prepared according to a one-pot process.

In further embodiments, the present disclosure relates to a solution process for polymerization of ethylene and

at least one additional polymerizable monomer to form a polymer composition, the process comprising: contacting ethylene and the additional polymerizable monomer with a catalyst composition and an electron donor modifier under polymerization conditions; wherein the catalyst composition comprises a starting procatalyst composition and an alkyl-aluminum cocatalyst; wherein the additional polymerizable monomer is a $C_{3-20}$ $\alpha$-olefin; and wherein the electron donor modifier is an electron donor modifier described herein.

Brief Description of the Drawings

FIG. 1A exhibits the effect the sample procatalyst compositions PCAT-1-A, PCAT-1-B, and PCAT-1-C and the starting procatalyst PCAT-1 have on polymer density (g/cc) for polymerization of ethylene and increasing levels of 1-octene (grams).

FIG. 1B exhibits the effect the sample procatalyst compositions PCAT-2-A, PCAT-2-B, and PCAT-2-C and the starting procatalyst PCAT-2 have on polymer density (g/cc) for polymerization of ethylene and increasing levels of 1-octene (grams).

FIG. 1C exhibits the effect the sample procatalyst compositions PCAT-3-A, PCAT-3-B, and PCAT-3-C and the starting procatalyst PCAT-3 have on polymer density (g/cc) for polymerization of ethylene and increasing levels of 1-octene (grams).

FIG. 1D exhibits the effect the sample procatalyst compositions PCAT-4-A, PCAT-4-B, and PCAT-4-C and the starting procatalyst PCAT-4 have on polymer density (g/cc) for polymerization of ethylene and increasing levels of 1-octene (grams).

FIG. 2A exhibits the effect the sample procatalyst compositions PCAT-1-A, PCAT-1-B, and PCAT-1-C and the starting procatalyst PCAT-1 have on high density fraction (HDF) content (%) for polymerization of ethylene and increasing levels of 1-octene (grams) from CEF analysis.

FIG. 2B exhibits the effect the sample procatalyst compositions PCAT-2-A, PCAT-2-B, and PCAT-2-C and the starting procatalyst PCAT-2 have on high density fraction (HDF) content (%) for polymerization of ethylene and increasing levels of 1-octene (grams) from CEF analysis.

FIG. 2C exhibits the effect the sample procatalyst compositions PCAT-3-A, PCAT-3-B, and PCAT-3-C and the starting procatalyst PCAT-3 have on high density fraction (HDF) content (%) for polymerization of ethylene and increasing levels of 1-octene (grams) from CEF analysis.

FIG. 2D exhibits the effect the sample procatalyst compositions PCAT-4-A, PCAT-4-B, and PCAT-4-C and the starting procatalyst PCAT-4 have on high density fraction (HDF) content (%) for polymerization of ethylene and increasing levels of 1-octene (grams) from CEF analysis.

FIG. 3A exhibits the effect the sample procatalyst compositions PCAT-1-A, PCAT-1-B, and PCAT-1-C and the starting procatalyst PCAT-1 have on HDF peak temperature (Tp3, °C) for polymerization of ethylene and increasing levels of 1-octene (grams) from CEF analysis.

FIG. 3B exhibits the effect the sample procatalyst compositions PCAT-2-A, PCAT-2-B, and PCAT-2-C and the starting procatalyst PCAT-2 have on HDF peak temperature (Tp3, °C) for polymerization of ethylene and increasing levels of 1-octene (grams) from CEF analysis.

FIG. 3C exhibits the effect the sample procatalyst compositions PCAT-3-A, PCAT-3-B, and PCAT-3-C and the starting procatalyst PCAT-3 have on HDF peak temperature (Tp3, °C) for polymerization of ethylene and increasing levels of 1-octene (grams) from CEF analysis.

FIG. 3D exhibits the effect the sample procatalyst compositions PCAT-4-A, PCAT-4-B, and PCAT-4-C and the starting procatalyst PCAT-4 have on HDF peak temperature (Tp3, °C) for polymerization of ethylene and increasing levels of 1-octene (grams) from CEF analysis.

FIG. 4A exhibits the DMS frequency sweep versus viscosity curve for the polymers produced in the single continuous reactor polymerization Runs 1-3, 8, and 9.

FIG. 4B exhibits the DMS frequency sweep versus viscosity curve for the polymers produced in the single continuous reactor polymerization Runs 4-8.

FIG. 4C exhibits the DMS frequency sweep versus viscosity curve for the polymers produced in the single continuous reactor polymerization Runs 8, 10, and 11.

Detailed Description

*Definitions*

All references to the Periodic Table of the Elements refer to the Periodic Table of the Elements published and

copyrighted by CRC Press, Inc., 1990. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure. For purposes of United States patent practice, the contents of any referenced patent, patent application or publication are incorporated by reference in their entirety (or its equivalent U.S. version is so incorporated by reference in its entirety), especially with respect to the disclosure of synthetic techniques, product and processing designs, polymers, catalysts, definitions (to the extent not inconsistent with any definitions specifically provided in this disclosure), and general knowledge in the art.

"Composition" and like terms mean a mixture or blend of two or more components.

"Polymer" means a compound prepared by polymerizing monomers, whether of the same or a different type. The generic term polymer embraces the term homopolymer, usually employed to refer to polymers prepared from only one type of monomer, and the term interpolymer and copolymer as defined below. It also encompasses all forms of interpolymers, e.g., random, block, homogeneous, heterogeneous, etc.

"Interpolymer" and "copolymer" mean a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers, etc. The terms "ethylene/alpha-olefin copolymer" and "propylene/alpha-olefin copolymer" are indicative of the terms "interpolymer" and "copolymer" used herein.

"Co-catalyst" or "cocatalyst" refers to those known in the art that can activate a transition metal procatalyst to form an active (final) catalyst composition.

"Starting procatalyst" or "working catalyst" as used herein refer to transition metal procatalysts that do not include electron donor modifiers. Typical starting procatalysts comprise magnesium chloride support and titanium halide(s).

"Procatalyst composition" as used herein refers to a transition metal procatalyst that includes an electron donor modifier.

The term "electron donor modifier" used herein refers to electron donors that are added to working catalysts or starting procatalysts with the intention of modifying existing catalyst active sites. An electron donor modifier is distinct from internal donors. Internal donors are added during the formation of the working catalysts or starting procatalysts. For example, internal donors are added to a magnesium halide support prior to introduction of transition metals. A further example includes adding an internal donor to a magnesium support precursor during halogenation to convert the magnesium precursor into magnesium halide. As an internal donor, a donor molecule changes catalyst behavior primarily by blocking sites on a magnesium halide support from transition metal deposition and/or influencing the formation of the magnesium halide support where transition metal active sites reside. In contrast, an electron donor modifier is added to a working catalyst or starting procatalyst and is believed to interact with transition metal active sites. An electron donor modifier can be introduced to a working catalyst or starting procatalyst before, during, or after activation by a cocatalyst. It can be added directly to the working catalyst or starting procatalyst. It can also be premixed with a cocatalyst before adding to the working catalyst or starting procatalyst.

Furthermore, any other term disclosed herein refers to those known in the art and those known as appropriate by one of ordinary skill in the art for the present disclosures. *Magnesium halide support*

The procatalyst compositions of the present disclosure may be prepared beginning first with preparation of a magnesium halide support. Preparation of a magnesium halide support begins with selecting an organomagnesium compound or a complex including an organomagnesium compound. Such compound or complex is preferably soluble in an inert hydrocarbon diluent. In certain embodiments, the amounts of components are such that when the active halide, such as a metallic or non-metallic halide, and the magnesium complex are combined, the resultant slurry has a halide to magnesium ratio of 1.5 to 2.5 (e.g., 1.8 to 2.2). Examples of suitable inert organic diluents include liquefied ethane, propane, isobutane, n-butane, n-hexane, the various isomeric hexanes, heptane, isooctane, isoparaffinic fluids, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and including those having boiling points in the range from about -50 °C to about 200 °C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. Preferred sources of magnesium moieties may include the magnesium C2-C8 alkyls and C1-C4 alkoxides. Such organomagnesium compound or complex may be reacted with a metallic or non-metallic halide source, such as a chloride, bromide, iodide, or fluoride, in order to make a magnesium halide compound under suitable conditions. Such conditions may include a temperature ranging from -25 °C to 100 °C, preferably 0 °C to 50 °C; a time ranging from 0.1 to 12 hours, preferably from 4 to 6 hours; or both. The result is a magnesium halide support.

Suitable non-metallic halides are represented by the formula R'X wherein R' is hydrogen or an active monovalent organic radical and X is a halogen. Particularly suitable non-metallic halides include, for example, hydrogen halides and active organic halides such as t-alkyl halides, allyl halides, benzyl halides and other active hydrocarbyl halides, wherein hydrocarbyl is as defined hereinbefore. An active organic halide is meant as a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active as defined hereinbefore are also suitably employed. Examples of preferred active non-metallic halides include hydrogen chloride, hydrogen bromide, t-butyl chloride, t-amyl bromide, allyl chloride, benzyl chloride, crotyl chloride, methylvinyl carbinyl chloride, α-phenylethyl bromide, diphenyl methyl chloride and the like. Most preferred are hydrogen chloride, t-butyl chloride, allyl chloride and benzyl chloride.

Suitable metallic halides which can be employed herein include those represented by the formula $MR_{y-a}X_a$ wherein M is a metal of Groups IIB, IIIA or IVA of Mendeleev's Periodic Table of Elements, R is a monovalent organic radical, X is a halogen, y has a value corresponding to the valence of M, and a has a value from 1 to y. Preferred metallic halides are aluminum halides of the formula $AlR_{3-a}X_a$ wherein each R is independently hydrocarbyl as hereinbefore defined such as alkyl, X is a halogen and a is a number from 1 to 3. Most preferred are alkylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitably employed.

As an optional step, the magnesium halide support is then reacted with a selected conditioning compound containing an element selected from the group consisting of aluminum, vanadium, zirconium, and hafnium under conditions suitable to form a conditioned magnesium halide support. This compound and the magnesium halide support are then brought into contact under conditions sufficient to result in a conditioned magnesium halide support. Such conditions may include a temperature ranging from 0 °C to 50 °C, preferably from 25 °C to 35 °C; a time ranging from 0.1 to 24 hours, preferably from 4 to 12 hours; or both. Such a temperature range includes ambient temperature.

*Starting Procatalyst*

Once the magnesium halide support is prepared and suitably aged, it is brought into contact with a titanium compound. In certain preferred embodiments, titanium halides or alkoxides, or combinations thereof, may be selected. Conditions may include a temperature within the range from 0 °C to 50 °C, preferably from 25 °C to 35 °C; a time of less than 10 minutes or a time from 0.1 hours to 24 hours, preferably from 6 hours to 12 hours; or both. Such a temperature range includes ambient temperature. The result of this step is adsorption of at least a portion of the titanium compound onto the magnesium halide support and formation of a starting procatalyst (i.e., working catalyst). In the preparation of the procatalyst, it is not necessary to separate hydrocarbon soluble components from hydrocarbon insoluble components.

Once the starting procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the starting procatalyst and the organometallic cocatalyst may be carried out *in situ,* or just prior to entering the polymerization reactor. Thus, the combination of the cocatalyst and the starting procatalyst may occur under a wide variety of conditions. Such conditions may include, for example, contacting them under an inert atmosphere such as nitrogen, argon or other inert gas at temperatures in the range from 0 °C to 300 °C, preferably from 15 °C to 250 °C. In the preparation of the catalytic reaction product, it is not necessary to separate hydrocarbon soluble components from hydrocarbon insoluble components. Time for contact between the starting procatalyst and cocatalyst may desirably range, for example, from 0 to 240 seconds, preferably from 5 to 120 seconds. Various combinations of these conditions may be employed.

*Electron Donor Modifier Treatment*

In embodiments of the present disclosure, procatalyst compositions are formed by further treating the above described starting procatalysts with an electron donor modifier having the formula (I):

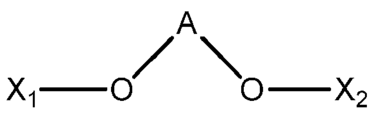 (I),

wherein:

A is $-CR^1R^2CR^3R^4CR^5R6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom, wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure, and
wherein $X_1$ and $X_2$ are not both hydrogen.

In certain embodiments, $X_1$ and $X_2$ are alkyl groups, each of $R^1$, $R^2$, $R^5$, and $R^6$ is hydrogen, and each of $R^3$, $R^4$, $R^7$, and $R^8$ is a branched or cyclic hydrocarbyl. In certain embodiments, the $X_1$-O group, the $X_{2-}$O group, or both groups are replaced with a functional group comprising at least one heteroatom selected from N, O, P, and S.

As an electron donor modifier, the modifier having the formula (I) is added directly to the starting procatalysts (i.e., the working catalysts) with the intention of modifying existing catalyst active sites.

In certain embodiments, the electron donor modifier is a 1,3-diether compound. Nonlimiting examples of suitable 1,3-diether compounds include dimethyl diether, diethyl diether, dibutyl diether, methyl ethyl diether, methyl butyl diether, 2,2-diethyl-1,3-dimethoxypropane, 2,2-di-n-butyl-1,3-dimethoxypropane, 2,2-diisobutyl-1,3-dimethoxypropane, 2-ethyl-2-n-butyl-1,3-dimethoxypropane, 2-n-propyl-2-cyclopentyl-1,3-dimethoxypropane, 2-n-propyl-2-cyclohexyl-1,3-diethoxypropane, 2-(2-ethylhexyl)-1,3-dimethoxypropane, 2-isopropyl-1,3-dimethoxypropane, 2-n-butyl-1,3-dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(2-fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl- 1,3-dimethoxypropane, 2,2-di-n-propyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-n-propyl-1,3-dimethoxypropane, 2-methyl-2-phenyl-1,3-dimethoxypropane, 2-methyl-2-cyclohexyl-1,3-dimethoxypropane, 2,2-bis(p-chlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2-methyl-2-isopropyl-1,3-dimethoxypropane, 2,2-diphenyl-1,3-dimethoxypropane, 2,2-dibenzyl-1,3-dethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimethoxypropane, 2,2-di-sec-butyl -1,3-dimethoxypropane, 2,2-di-tert-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3,7-dimethyl)octyl-1,3-dimethoxypropane, 2,2-diisopropyl-1,3-dimethoxypropane, 2-isopropyl-2-cyclohexylmethyl-1,3-dimethoxypropane, 2,2-diisopentyl-1,3-dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2- n-heptyl- 2-n-pentyl-1,3-dimethoxypropane, 1,3-dimethoxy-2,2,4-trimethylpentane, and 9,9-bis(methoxymethyl)fluorene. In certain embodiments, one of the alkoxy groups in the aforementioned 1,3-diether compounds may be substituted with an hydroxyl (OH) group.

In certain embodiments, the electron donor modifier is a 1,3-diol diester compound. Nonlimiting examples of suitable 1,3-diol diester compounds include 2-n-propyl-1,3-propylene-glycol dibenzoate, 2-n-butyl-1,3-propylene-glycol dibenzoate, 1-phenyl-1,3-propylene-glycol dibenzoate, 1,3-diphenyl-1,3-propylene-glycol dibenzoate, 2-methyl-1,3-diphenyl-1,3-propylene-glycol dibenzoate, 2,2-dimethyl-1,3-diphenyl-1,3-propylene-glycol dibenzoate, 2-ethyl-1,3-di(tert-butyl)-1,3-propylene-glycol dibenzoate, 2-n-butyl-2-ethyl-1,3-propylene-glycol dibenzoate, 2,2-diethyl-1,3-propylene-glycol dibenzoate, 2-dimethoxymethyl-1,3-propylene-glycol dibenzoate, 2-methyl-2-n-propyl-1,3-propylene-glycol dibenzoate, 2-isoamyl-2-isopropyl-1,3-propylene-glycol dibenzoate, 2-isoamyl-2-isopropyl-1,3-propylene-glycol di(p-chlorobenzoate), 2-isoamyl-2-isopropyl -1,3-propylene-glycol di(m-chlorobenzoate), 2-isoamyl-2-isopropyl-1 3-propylene-glycol di(p-methoxybenzoate), 2-isoamyl-2-isopropyl-1,3-propylene-glycol di(p-methylbenzoate), 2,2-diisobutyl-1,3-propylene-glycol dibenzoate, 1,3-diisopropyl-1,3-propylene-glycol di(4-n-butylbenzoate), 2-ethyl-2-methyl-1,3-propylene-glycol dibenzoate, 2,3,3-trimethyl-13-butylene-glycol di(p-chlorobenzoate), 2-methyl-1-phenyl-1,3-butylene-glycol dibenzoate, 2,3-diisopropyl-1,3-butylene-glycol dibenzoate, 4,4,4-trifluoro-1-(2-naphthyl)-1,3-butylene-glycol dibenzoate, 3-methyl-2,4-pentanediol dibenzoate, 3-ethyl-2,4-pentanediol dibenzoate, 3-n-propyl-2,4-pentanediol dibenzoate, 3-n-butyl-2,4-pentanediol dibenzoate, 3,3-dimethyl-2,4-pentanediol dibenzoate, 2-methyl-1,3-pentanediol dibenzoate, 2-methyl-1,3-pentanediol di(p-chlorobenzoalte), 2-methyl-1,3-pentanediol di(p-methylbenzoate), 2-n-butyl-1,3-pentanediol di(p-methylbenzoate), 2-methyl-1,3-pentanediol di(p-tert-butylbenzoate), 2,2-dimethyl-1,3-pentanediol dibenzoate, 2-ethyl-1,3-pentanediol dibenzoate, 2-n-butyl-1,3-pentanediol dibenzoate, 2-allyl-1,3-pentanediol dibenzoate, 2-methyl-1,3-pentanediol dibenzoate, 2-ethyl-1,3-pentanediol dibenzoate, 2-n-propyl-1,3-pentanediol dibenzoate, 2-n-butyl-1,3-pentanediol dibenzoate, 2,2,4-trimethyl-1,3-pentanediol dibenzoate, 3-methyl-1-trifluoromethyl-2,4-pentanediol dibenzoate, 3-n-butyl-3-methyl-2,4-pentanediol dibenzoate, 2-ethyl-1,3-hexanediol dibenzoate, 2-n-propyl-1,3-hexanediol dibenzoate, 2-n-butyl-1,3-hexanediol dibenzoate, 4-ethyl-1,3-hexanediol dibenzoate, 4-methyl-1,3-hexanediol dibenzoate, 3-methyl-1,3-hexanediol dibenzoate, 3-ethyl-1,3-hexanediol dibenzoate, 2,2,4,6,6-pentamethyl-3,5-hexanediol dibenzoate, 2-methyl-hepta-6-ene-2,4-diol dibenzoate, 3-methyl-hepta-6-ene-2,4-diol dibenzoate, 4-methyl-hepta-6-ene-2,4-diol dibenzoate, 5-methyl-hepta-6-ene-2,4-diol dibenzoate, 6-methyl-hepta-6-ene-2,4-diol dibenzoate, 3-ethyl-hepta-6-ene-2,4-diol dibenzoate, 4-ethyl-hepta-6-ene-2,4-diol dibenzoate, 5-ethyl-hepta-6-ene-2,4-diol dibenzoate, 6-ethyl-hepta-6-ene-2,4-diol dibenzoate, 3-n-propyl-hepta-6-ene-2,4-diol dibenzoate, 4-n-propyl-hepta-6-ene-2,4-diol dibenzoate, 5-n-propyl-hepta-6-ene-2,4-diol dibenzoate, 6-n-propyl-hepta-6-ene-2,4-diol dibenzoate, 3-n-butyl-hepta-6-ene-2,4-diol dibenzoate, 4-n-butyl-hepta-6-ene-2,4-diol dibenzoate, 5-n-butyl-hepta-6-ene-2,4-diol dibenzoate, 6-n-butyl-hepta-6-ene-2,4-diol dibenzoate, 3,5-dimethyl-hepta-6-ene-2,4-diol dibenzoate, 3,5-diethyl-hepta-6-ene-2,4-diol dibenzoate, 3,5-di-n-propyl-hepta-6-ene-2,4-diol dibenzoate, 3,5-di-n-butyl-hepta-6-ene-2,4-diol dibenzoate, 3,3-dimethyl-hepta-6-ene-2,4-diol dibenzoate, 3,3-diethyl-hepta-6-ene-2,4-diol dibenzoate, 3,3-di-n-propyl-hepta-6-ene-2,4-diol dibenzoate, 3,3-di-n-butyl-hepta-6-ene-2,4-diol dibenzoate, 3,5-heptanediol dibenzoate, 2-methyl-3,5-heptanediol dibenzoate, 3-methyl-3,5-heptanediol dibenzoate, 4-methyl-3,5-heptanediol dibenzoate, 5-methyl-3,5-heptanediol dibenzoate, 6-methyl-3,5-heptanediol dibenzoate, 3-ethyl-3,5-heptanediol dibenzoate, 4-ethyl-3,5-heptanediol dibenzoate, 5-ethyl-3,5-heptanediol dibenzoate, 3-n-propyl-3,5-heptanediol dibenzoate, 4-n-propyl-3,5-heptanediol dibenzoate, 3-n-butyl-3,5-heptanediol dibenzoate, 2,3-dimethyl-3,5-heptanediol dibenzoate, 2,4-dimethyl-3,5-heptanediol dibenzoate, 2,5-dimethyl-3,5-heptanediol dibenzoate, 2,6-dimethyl-3,5-heptanediol dibenzoate, 3,3-dimethyl-3,5-heptanediol dibenzoate, 4,4-dimethyl-3,5-heptanediol dibenzoate, 6,6-dimethyl-3,5-heptanediol dibenzoate, 3,4-dimethyl-3,5-heptanediol dibenzoate, 3,5-dimethyl-3,5- heptanediol dibenzoate, 3,6-dimethyl-3,5-heptanediol dibenzoate, 4,5-dimethyl-3,5-heptanediol dibenzoate, 4,6- dimethyl-3,5-heptanediol dibenzoate, 4,4-dimethyl-3,5-heptanediol dibenzoate, 6,6-dimethyl-3,5-heptanediol dibenzoate, 3-ethyl -2-methyl-3,5-heptanediol dibenzoate, 4-ethyl-2-methyl-3,5-heptanediol dibenzoate, 5-ethyl-2-methyl-3,5-heptanediol dibenzoate, 3-ethyl-3-methyl-3,5-heptanediol dibenzoate, 4-ethyl-3-methyl-3,5-heptanediol dibenzoate, 5-ethyl-3-methyl-3,5-heptanediol dibenzoate, 3-ethyl-4-methyl-3,5-heptanediol dibenzoate, 4-ethyl-4-methyl-3,5-heptanediol dibenzoate, 5-ethyl-4-methyl-3,5-heptanediol dibenzoate, 2-methyl-3-n-propyl-3,5-heptanediol dibenzoate, 2-methyl-4-n-propyl-3,5-heptanediol dibenzoate, 2-methyl-5 -n-propyl-3,5 -heptanediol dibenzoate, 3 -methyl-3 -n-propyl-3,5 -heptanediol dibenzoate, 3-methyl-4-n-propyl-3,5-heptanediol dibenzoate, 3-methyl-5-n-propyl-3,5-heptanediol dibenzoate, 4-methyl-3-methyl-3-n-propyl-3,5-heptanediol dibenzoate, 4-methyl-4-n-propyl-3,5-heptanediol dibenzoate, 4-methyl-5-n-propyl-3,5-heptanediol dibenzoate, 6-methyl-2,4-heptanediol di(p-chlorobenzoate), 6-methyl-2,4-heptanediol di(p-methylbenzoate), 6-methyl-2,4-heptanediol di(m-methyl benzoate), 3,6-dimethyl-2,4-heptanediol dibenzoate, 2,2,6,6-tetramethyl-3,5-heptanediol dibenzoate, 4-methyl-3,5-octandiol dibenzoate, 4-ethyl-3,5-octandiol dibenzoate, 4-n-propyl-3,5-octandiol dibenzoate, 5-n-propyl-3,5-octandiol dibenzoate, 4-n-butyl-3,5-octandiol dibenzoate, 4,4-dimethyl-3,5-octandiol dibenzoate, 4,4-diethyl-3,5-octandiol dibenzoate, 4,4-di-n-propyl-3,5-octandiol dibenzoate, 4-ethyl-4-methyl-3,5-octandiol dibenzoate, 3-phenyl-3,5-octandiol dibenzoate, 3-ethyl-2-methyl-3,5-octandiol dibenzoate, 4-ethyl-2-methyl-3,5-octandiol dibenzoate, 5-ethyl-2-methyl-3,5-octandiol dibenzoate, 6-ethyl-2-methyl-3,5-octandiol dibenzoate, 5-methyl-4,6-nonandiol dibenzoate, 5-ethyl-4,6-nonandiol dibenzoate, 5-n-propyl-4,6-nonandiol dibenzoate, 5-n-butyl-4,6-nonandiol dibenzoate, 5,5-dimethyl-4,6-nonandiol dibenzoate, 5,5-diethyl-4,6-nonandiol dibenzoate, 5,5-di-n-propyl-4,6-nonandiol dibenzoate, 5,5-di-n-butyl-4,6-nonandiol dibenzoate, 4-ethyl-5-methyl-4,6-nonandiol dibenzoate, 5-phenyl-4,6-nonandiol dibenzoate, 4,6-nonandiol dibenzoate, 1,1-bis(benzoyloxymethyl)-3-cyclohexene, 9,9-bis(benzoyloxymethyl)fluorene, 9,9-bis((m-methoxybenzoyloxy)methyl)fluorene, 9,9-bis((m-chlorobenzoyloxy)methyl)fluorene, 9, 9-bis((p-chlorobenzoyloxy)methyl)fluorene, pentaerythritol tetrakis(3-(3,5-di-tert-butyl-4-hydroxyphenyl)propionate) (Irganox 1010), pentaerythritol tetrabenzoate, and 1,2,3-propanetriol tribenzoate.

In certain embodiments, the electron donor modifier is a alkoxy silane compound containing at least 2 alkoxy groups. Nonlimiting examples of suitable alkoxy silane compounds include dicyclopentyldimethoxysilane, di-tert-butyldimethoxysilane, methylcyclohexyldimethoxysilane, methylcyclohexyldiethoxysilane, di-n-butyldimethoxysilane, ethylcyclohexyldimethoxysilane, diphenyldimethoxysilane, diisopropyldimethoxysilane, di-n-propyldimethoxysilane, diisobutyldimethoxysilane, diisobutyldiethoxysilanc, cyclopentyltrimethoxysilane, isopropyltrimethoxysilane, n-propyltrimethoxysilane, n-propyltriethoxysilane, ethyltriethoxysilane, tetramethoxysilane, and tetraethoxysilane.

Following treatment of a starting procatalyst with an electron donor modifier to form a procatalyst composition, a final catalyst may be formed by combining the procatalyst composition with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the procatalyst composition and the organometallic cocatalyst may be carried out *in situ,* or just prior to entering the polymerization reactor. Thus, the combination of the cocatalyst and the procatalyst composition may occur under a wide variety of conditions. Such conditions may include, for example, contacting them under an inert atmosphere such as nitrogen, argon or other inert gas at temperatures in the range from 0 °C to 300 °C, preferably from 15 °C to 250 °C. In the preparation of the catalytic reaction product, it is not necessary to separate hydrocarbon soluble components from hydrocarbon insoluble components. Time for contact

between the procatalyst composition and cocatalyst may desirably range, for example, from 0 to 240 seconds, or longer than 5 seconds, preferably from 5 to 120 seconds. Various combinations of these conditions may be employed.

In at least one aspect of the present disclosure, the process for preparing the procatalyst compositions is a one-pot process with no separation or purification of any component. In particular, the solvent used as diluent for the magnesium halide support remains as part of the slurry of the final procatalyst composition. It is believed that the catalyst components on the magnesium halide support, such as TiCl4 and alkylaluminum halides, may go into the hydrocarbon solvent phase and eventually establish an equilibrium. Separating the soluble material from the insoluble material may cause change to the composition of the procatalyst and thus lead to difference in catalyst performance. In addition, such separation may increase manufacturing cost.

In certain embodiments of the present disclosure, the electron donor modifier having the formula (I) is added to the starting procatalyst before activation by the cocatalyst. In further embodiments of the present disclosure, the electron donor modifier having the formula (I) is added to the starting procatalyst during activation by the cocatalyst. In further embodiments of the present disclosure, the electron donor modifier having the formula (I) is added to the starting procatalyst after activation by the cocatalyst.

In certain embodiments, the one-pot process for preparing a procatalyst composition comprises the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing at least titanium to form a supported titanium compound; and
(c) contacting the supported titanium compound with an electron donor modifier having the formula (I) described above.

In some embodiments, step (c) of the one-pot process of the present disclosure includes addition of the electron donor modifier to the supported titanium compound at a donor/titanium molar ratio of 0.01 to 100. In certain embodiments, step (c) includes addition of the electron donor modifier to the supported titanium compound at a donor/titanium molar ratio of 0.1 to 10 and aging for at least 1 minute. In some embodiments, steps (a) to (c) are conducted at a reaction temperature from -50 °C to 100 °C. In certain embodiments, steps (a) to (c) are conducted at a reaction temperature from 10 °C to 50 °C. In some embodiments, the hydrocarbon solvent of step (a) is also present in steps (b) and (c).

*Polymerization Using Procatalyst Compositions*

Once the procatalyst compositions of the present disclosure have been prepared, they are suitable to use for olefin polymerizations. In particular embodiments, these are solution (wherein the temperature is high enough to solubilize the polymer in the carrier) polymerizations, or the like, to prepare polyethylene (PE) polymers. The prepared PE polymers may include high density polyethylene (HDPE), ultralow density polyethylene (ULDPE), linear low density polyethylene (LLDPE), medium density polyethylene (MDPE), high melt strength high density polyethylene (HMS-HDPE), or combinations thereof. In general this may be carried out generally in a reaction medium, such as an isoparaffin or other aliphatic hydrocarbon diluents, with the olefin, or a combination of olefins, being brought into contact with the reaction medium in the presence of the procatalyst composition and the cocatalyst. Conditions may be any that are suitable for solution polymerizations.

The polymers of the present invention can be homopolymers of C2-C20 alpha-olefins, such as ethylene, propylene, or 4-methyl-1-pentene, or they may be interpolymers of ethylene or propylene with at least one or more alpha-olefins and/or C2-C20 acetylenically unsaturated monomers and/or C4-C18 diolefins. They may also be interpolymers of ethylene with at least one of the above C3-C20 alpha-olefins, diolefins and/or acetylenically unsaturated monomers in combination with other unsaturated monomers. Those skilled in the art will understand that selected monomers are desirably those that do not destroy conventional Ziegler-Natta catalysts. For example, in one embodiment, ethylene or a mixture of ethylene and from about 0.1 to about 20 weight percent (wt%), for example, from about 0.1 to about 15 wt%, or in the alternative, from about 0.1 to about 10 wt%; or in the alternative, from 0.1 to about 5 weight percent of 1-hexene, 1-octene, or a similar higher a-olefin, based on total monomer in the final copolymer, may be successfully polymerized using the process of the present disclosure.

In the polymerization process employing the aforementioned catalytic reaction product, polymerization is effected by adding a catalytic amount of the procatalyst composition to a polymerization reactor containing the selected a-olefin monomers. The polymerization reactor is maintained at temperatures in the range from 150 °C to 300 °C, preferably at solution polymerization temperatures, e.g., from 150 °C to 250 °C, for a residence time, in certain non-limiting embodiments, ranging from 5 minutes to 8 hours. Longer or shorter residence times may alternatively be employed. It is generally desirable to carry out the polymerization in the absence of moisture and oxygen and in the presence of a catalytic amount of the catalytic reaction product that is typically within the range from 0.0001 to about 0.01 milligram-atoms transition metal per liter of diluent. It is understood, however, that the most advantageous catalyst concentration will depend upon polymerization conditions such as temperature, pressure, solvent and the presence of catalyst poisons and that the foregoing range is given for illustrative purposes of one particular but non-limiting embodiment only. For example, pressures may be from 150 to 3,000 psi. However, polymerization within the scope of the present disclosure can occur at pressures from atmospheric up to pressures determined by the capabilities of the polymerization equipment.

Generally, in the polymerization process, a carrier which may be an inert organic diluent or solvent or excess monomer is generally employed. Generally care is desirably taken to avoid oversaturation of the solvent with polymer. If such saturation occurs before the catalyst becomes depleted, the full efficiency of the catalyst may not be realized. In particular embodiments, it may be preferable that the amount of polymer in the carrier not exceed 30 percent, based on the total weight of the reaction mixture. It may also be very desirable to stir the polymerization components in order to attain desirable levels of temperature control and to enhance the uniformity of the polymerization throughout the polymerization zone. For example, in the case of relatively more rapid reactions with relatively active catalysts, means may be provided for refluxing monomer and diluent, if diluent is included, thereby removing some of the the heat of reaction. In any event, adequate means should be provided for dissipating the exothermic heat of polymerization. Thus, polymerization may be effected in a batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

Any conventional ethylene (co)polymerization reaction may be employed to produce the inventive polyethylene composition. Such conventional ethylene (co)polymerization reactions include, but are not limited to, slurry phase polymerization process, solution phase polymerization process, and combinations thereof using one or more conventional reactors, e.g., loop reactors, stirred tank reactors, batch reactors in parallel, series, and/or any combinations thereof. In certain embodiments, the polymerization reactor may comprise two or more reactors in series, parallel, or combinations thereof. In certain embodiments, the polymerization reactor is one reactor.

The polymerization is desirably carried out as a continuous polymerization, preferably a continuous, solution polymerization, in which catalyst components, monomers, and optionally solvent, adjuvants, scavengers, and polymerization aids are continuously supplied to the reaction zone and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. Both homogeneous and plug-flow type reaction conditions may be employed.

Without limiting in any way the scope of the invention, one means for carrying out such a polymerization process is as follows. In a stirred-tank reactor, the monomers to be polymerized are introduced continuously together with any solvent or diluent. The reactor contains a liquid phase composed substantially of monomers together with any solvent or diluent and dissolved polymer. Preferred solvents include $C_{4-10}$ hydrocarbons or mixtures thereof, especially alkanes such as hexane or mixtures of alkanes, as well as one or more of the monomers employed in the polymerization.

Catalysts along with cocatalyst are continuously or intermittently introduced in the reactor liquid phase or any recycled portion thereof. The reactor temperature and pressure may be controlled by adjusting the solvent/monomer ratio, the catalyst addition rate, as well as by cooling or heating coils, jackets or both. The extent of the reaction is controlled by the rate of catalyst addition. The ethylene content of the polymer product is determined by the ratio of ethylene to comonomer in the reactor, which is controlled by manipulating the respective feed rates of these components to the reactor. The polymer product molecular weight is controlled, optionally, by controlling other polymerization variables such as the temperature, monomer concentration, or hydrogen feed rate as is well known in the art. Upon exiting the reactor, the effluent is contacted with a catalyst kill agent such as water, steam or an alcohol. The polymer solution is optionally heated, and the polymer product is recovered by flashing off gaseous monomers as well as residual solvent or diluent at reduced pressure, and, if necessary, conducting further devolatilization in equipment such as a devolatilizing extruder. In a continuous process the mean residence time of the catalyst and polymer in the reactor generally is from 1 minute to 8 hours, and preferably from 5 minutes to 6 hours.

Alternatively, the foregoing polymerization may be carried out in a continuous loop reactor with or without a monomer or catalyst gradient established between differing regions thereof, optionally accompanied by separated addition of catalysts and operating under adiabatic or non-adiabatic solution polymerization conditions or combinations of the foregoing reactor conditions. Examples of suitable loop reactors and a variety of suitable operating conditions for use therewith are found in U.S. Pat. Nos. 5,977,251, 6,319,989 and 6,683,149.

The resulting polymer may further be melt screened. Subsequent to the melting process in the extruder, the molten composition is passed through one or more active screens, positioned in series of more than one, with each active screen having a micron retention size of from about 2 $\mu$m to about 400 $\mu$m (2 to 400 X $10^{-6}$ m), and preferably about 2 $\mu$m to about 300 $\mu$m (2 to 300 X $10^{-6}$ m), and most preferably about 2 $\mu$m to about 70 $\mu$m (2 to 70 X $10^{-6}$ m), at a mass flux of about 5 to about 100 lb/hr/in$^2$ (1.0 to about 20 kg/s/m$^2$). Such further melt screening is disclosed in U.S. Patent No. 6,485,662, which is incorporated herein by reference to the extent that it discloses melt screening.

Hydrogen is often employed in the practice of this disclosure, for the purpose of controlling the molecular weight of the resultant polymer. For the purpose of the present disclosure, it is beneficial to employ hydrogen in the polymerization mixture in concentrations ranging preferably from 0.001 to 1 mole per mole of monomer. The larger amounts of hydrogen within this range may be useful to produce generally lower molecular weight polymer. It is generally known to those skilled in the art that hydrogen may be added to the polymerization vessel either with a monomer stream, or separately therefrom, before, during or after addition of the monomer to the polymerization vessel. However, in preferred embodiments it is highly desirable to ensure that the hydrogen is added either before or during addition of the catalyst, whose catalytic activity is in the range of from 20,000 to 3 million grams of polymer per gram of Ti, such as, for example, from 60,000 to 2 million grams of polymer per gram of Ti.

*Polymer Composition*

The resulting polymer compositions of the present disclosure, based on the polymerization processes described above, may have a polymer density in the range of 0.900 to 0.960 g/cc (e.g., from 0.910 to 0.950 g/cc and/or from 0.910 to 0.945 g/cc). In certain embodiments, the resulting polymer compositions comprise a polymer density that is at least 0.003 g/cc higher than a polymer composition prepared by the one-pot process of the present disclosure without step (c) (i.e., without contacting the supported titanium procatalyst with an electron donor modifier having the formula (I)).

The resulting polymer compositions of the present disclosure may have a high density fraction (HDF) content in crystallization elution fractionation (CEF) of greater than 15 weight percent (e.g., greater than 20 weight percent and/or greater than 25 weight percent). In certain embodiments, the resulting polymer compositions have a HDF content in CEF of at least 10 weight percent higher than a polymer composition prepared by the one-pot process of the present disclosure without step (c) (i.e., without contacting the supported titanium procatalyst with an electron donor modifier having the formula (I)).

The resulting polymer compositions of the present disclosure may have a HDF peak temperature (Tp3) of equal to or greater than 98.0 °C (e.g., equal to or greater than 98.5 °C, equal to or greater than 99.00 °C, equal to or greater than 99.25 °C, and/or equal to or greater than 99.5 °C). In certain embodiments, the resulting polymer compositions have a HDF peak temperature (Tp3) of at least 0.5 °C higher than a polymer composition prepared by the one-pot process of the present disclosure without step (c) (i.e., without contacting the supported titanium procatalyst with an electron donor modifier having the formula (I)).

The resulting polymer compositions may have a molecular weight distribution ($M_w/M_n$) (measured according to the conventional GPC method) in the range of 2.0 to 6.0, (e.g., from 2.5 to 5 and/or from 2.5 to 4.75).

The resulting polymer compositions of the present disclosure may have a melt index ($I_2$) in the range of 0.1 to 50 g/10 minutes (e.g., from 0.5 to 25 g/10 minutes and/or from 0.5 to 10 g/10 minutes). In certain embodiments, the resulting polymer compositions have a melt flow ratio ($I_{10}/I_2$) in the range of from 6 to 12.

The resulting polymer compositions of the present disclosure may have a molecular weight ($M_w$) in the range of 50,000 to 300,000 daltons.

The resulting polymer compositions of the present disclosure may have a melt strength of from 1.0 to 6.0 cN (e.g., from 2.0 to 5.0 cN and/or from 3.0 to 4.5 cN).

The resulting polymer compositions of the present disclosure may have a viscosity ratio of 1.0 to 8.0 (e.g., from 2.0 to 7.5 and/or from 3.0 to 7.0).

The resulting polymer compositions may contain from 0.1 to 300 ppm of a compound having the formula (I) described above. Furthermore, the resulting polymer compositions may have a highest peak melting temperature (Tm) of greater than 120 °C and a heat of fusion of greater than 140 J/g. Further, the resulting polymer compositions may have a percent crystallinity of greater than 45 weight percent.

The resulting polymer compositions may further comprise additional components such as other polymers and/or additives. Such additives include, but are not limited to, antistatic agents, color enhancers, dyes, lubricants, fillers, pigments, primary antioxidants, secondary antioxidants, processing aids, UV stabilizers, and combinations thereof. The resulting polymer composition may contain any amounts of additives. The resulting polymer compositions may comprise from about 0 to about 10 percent by the combined weight of such additives, based on the weight of the resulting polymer composition including such additives. Antioxidants, such as Irgafos™ 168 and Irganox™ 1010, may be used to protect the resulting polymer composition from thermal and/or oxidative degradation. Irganox™ 1010 is tetrakis (methylene (3,5-di-tert-butyl-4hydroxyhydrocinnamate) available from BASF. Irgafos™ 168 is tris (2,4 di-tert-butylphenyl) phosphite available from BASF.

The resulting polymers produced hereby may include a wide variety of products including, but not limited, high density polyethylenes (HDPE), plastomers, medium density polyethylenes (MDPE), polypropylene and polypropylene copolymers. Useful forming operations for the polymers may include, but are not limited to, film, sheet, pipe and fiber extrusion and co-extrusion as well as blow molding, injection molding and rotary molding may be pursued. Films include blown or cast films formed by co-extrusion or by lamination useful as shrink film, cling film, stretch film, sealing film,

oriented film, snack packaging, heavy duty bags, grocery sacks, baked and frozen food packaging, medical packaging, industrial liners, agricultural film applications, and membranes, for example, in food-contact and non-food-contact applications. Fibers include melt spinning, solution spinning and melt blown fiber operations for use in woven and non-woven form to make filters, diaper fabrics, medical garments and geotextiles. Extruded articles include medical tubing, wire and cable coatings, geomembranes and pond liners. Molded articles include single and multi-layered constructions in the form of bottles, tanks, large hollow articles, rigid food containers and toys.

## EXAMPLES

*Test Methods*

Samples for density measurements were prepared according to ASTM D 4703-10 Annex A1 Procedure C. Approximately 7 g of sample was placed in a "2" x 2" x 135 mil thick" mold, and this was pressed at 374°F (190°C) for six minutes at 3,000 $lb_f$. Then the pressure was increased to 30,000 $lb_f$ for four minutes. This was followed by cooling at 15°C per minute, at 30,000 $lb_f$, to approximately a temperature of 40°C. The "2" x 2" x 135 mil" polymer sample (plaque) was then removed from the mold, and three samples were cut from the plaque with a ½" x 1" die cutter. Density measurements were made within one hour of sample pressing, using ASTM D792-08, Method B. Density was reported as an average of three measurements.

Melt index (MI), or I2, was measured in accordance with ASTM D 1238-10, Condition 190°C/2.16 kg, Procedure B, and was reported in grams eluted per 10 minutes (g/10 min). I10 was measured in accordance with ASTM D 1238-10, Condition 190°C/10 kg, Procedure B, and was reported in grams eluted per 10 minutes (g/10 min).

For dynamic mechanical spectroscopy (DMS) testing, resins were compression-molded into "3 mm thick x 1 inch" circular plaques at 350°F, for 6.5 minutes, under 20,000 $lb_f$, in air. The sample was then taken out of the press, and placed on the counter to cool. A constant temperature frequency sweep was performed, using a TA Instruments "Advanced Rheometric Expansion System (ARES)," equipped with 25 mm (diameter) parallel plates, under a nitrogen purge. The sample was placed on the plate, and allowed to melt for five minutes at 190°C. The plates were then closed to a gap of 2 mm, the sample trimmed (extra sample that extends beyond the circumference of the "25 mm diameter" plate was removed), and then the test was started. The method had an additional five minute delay built in, to allow for temperature equilibrium. The experiments were performed at 190°C, over a frequency range of 0.1 to 100 rad/s. The strain amplitude was constant at 10%. The complex viscosity $\eta^*$, tan ($\delta$) or tan delta, viscosity at 0.1 rad/s (V0.1), the viscosity at 100 rad/s (V100), and the viscosity ratio (V0.1/V100) were measured.

Melt strength measurements were conducted on a Gottfert Rheotens 71.97 (Göettfert Inc.; Rock Hill, SC), attached to a Gottfert Rheotester 2000 capillary rheometer. The melted sample (about 25 to 30 grams) was fed with a Göettfert Rheotester 2000 capillary rheometer, equipped with a flat entrance angle (180 degrees) of length of 30 mm, diameter of 2.0 mm, and an aspect ratio (length/diameter) of 15. After equilibrating the samples at 190°C for 10 minutes, the piston was run at a constant piston speed of 0.265 mm/second. The standard test temperature was 190°C. The sample was drawn uniaxially to a set of accelerating nips, located 100 mm below the die, with an acceleration of 2.4 $mm/s^2$. The tensile force was recorded as a function of the take-up speed of the nip rolls. The following conditions were used in the melt strength measurements: plunger speed = 0.265 mm/second; wheel acceleration = 2.4 $mm/s^2$; capillary diameter = 2.0 mm; capillary length = 30 mm; and barrel diameter = 12 mm. Melt strength is reported as the plateau force (cN) before the strand broke.

Differential Scanning Calorimetry (DSC) can be used to measure the melting and crystallization behavior of a polymer over a wide range of temperatures. For example, the TA Instruments Q2000 DSC, equipped with an RCS (refrigerated cooling system) and an autosampler is used to perform this analysis. During testing, a nitrogen purge gas flow of 50 ml/min is used. Each sample is melt pressed into a thin film at about 190°C; the melted sample is then air-cooled to room temperature (~25°C). The film sample was formed by pressing a "0.5 to 0.9 gram" sample at 190°C at 20,000 $lb_f$ and 10 seconds, to form a "0.1 to 0.2 mil thick" film. A 3-10 mg, six mm diameter specimen was extracted from the cooled polymer, weighed, placed in an aluminum pan (about 50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C, and held isothermal for five minutes, in order to remove its thermal history. Next, the sample was cooled to -40°C, at a 10°C/minute cooling rate, and held isothermal at -40°C for five minutes. The sample was then heated to 150°C (this is the "second heat" ramp) at a 10°C/minute heating rate. The cooling and second heating curves are recorded. The cooling curve was analyzed by setting baseline endpoints from the beginning of crystallization to -20°C. The heating curve was analyzed by setting baseline endpoints from -20°C to the end of melting. The values determined were peak melting temperature (Tm), peak crystallization temperature (Tc), heat of fusion (Hf) (in Joules per gram), and the calculated % crystallinity for ethylene-based polymer samples using the following equations:

$$\% \text{ Crystallinity} = ((\text{Hf})/(292 \text{ J/g})) \times 100$$

The heat of fusion and the peak melting temperatures are reported from the second heat curve. The peak crystallization temperatures are determined from the cooling curve.

For gel permeation chromatography (GPC), the chromatographic system consisted of a PolymerChar GPC-IR (Valencia, Spain) high temperature GPC chromatograph equipped with an internal IR5 detector. The autosampler oven compartment was set at 160° Celsius and the column compartment was set at 150° Celsius. The columns used were 3 Agilent "Mixed B" 30cm 10-micron linear mixed-bed columns and a 10-μm pre-column. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times \left(M_{polystyrene}\right)^{B} \qquad \text{(EQ1)}$$

where M is the molecular weight, A has a value of 0.4315 and B is equal to 1.0.

A fifth order polynomial was used to fit the respective polyethylene-equivalent calibration points. A small adjustment to A (from approximately 0.415 to 0.44) was made to correct for column resolution and band-broadening effects such that NIST standard NBS 1475 is obtained at 52,000 g/mol Mw.

The total plate count of the GPC column set was performed with Eicosane (prepared at 0.04 g in 50 milliliters of TCB and dissolved for 20 minutes with gentle agitation.) The plate count (Equation 2) and symmetry (Equation 3) was measured on a 200 microliter injection according to the following equations:

$$Plate\ Count = 5.54 * \left(\frac{\mathrm{RV}_{\text{Peak Max}}}{Peak\ Width\ at\ \frac{1}{2}height}\right)^{2} \qquad \text{(EQ2)}$$

where RV is the retention volume in milliliters, *the peak width* is in milliliters, *the peak max* is the maximum height of the peak, and *1/2 height* is ½ height of the peak maximum.

$$Symmetry = \frac{\left(Rear\ Peak\ RV_{one\ tenth\ height} - RV_{Peak\ max}\right)}{\left(RV_{Peak\ max} - Front\ Peak\ RV_{one\ tenth\ height}\right)} \qquad \text{(EQ3)}$$

where *RV* is the retention volume in milliliters and the *peak width* is in milliliters, *peak max* is the maximum position of the peak, *one tenth height* is 1/10 height of the peak maximum, *rear peak* refers to the peak tail at later retention volumes than the peak max, and *front peak* refers to the peak front at earlier retention volumes than the peak max. The plate count for the chromatographic system should be greater than 24,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 2 hours at 160° Celsius under "low speed" shaking.

The calculations of Mn, Mw, and Mz were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$M_n = \frac{\sum^{i} IR_i}{\sum^{i}\left( IR_i \big/ M_{polyethylene_i} \right)} \quad \text{(EQ 4)}$$

$$M_w = \frac{\sum^{i}\left( IR_i * M_{polyethylene_i} \right)}{\sum^{i} IR_i} \quad \text{(EQ 5)}$$

$$M_z = \frac{\sum^{i}\left( IR_i * M_{polyethylene_i}^{\;2} \right)}{\sum^{i}\left( IR_i * M_{polyethylene_i} \right)} \quad \text{(EQ 6)}$$

In order to monitor the deviations over time, a flowrate marker (decane) was introduced into each sample via a micropump controlled with the PolymerChar GPC-IR system. This flowrate marker was used to linearly correct the flowrate for each sample by alignment of the respective decane peak within the sample to that of the decane peak within the narrow standards calibration. Any changes in the time of the decane marker peak are then assumed to be related to a linear shift in both flowrate and chromatographic slope. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (as a measurement of the calibration slope) is calculated as Equation 7. Processing of the flow marker peak was done via the PolymerChar GPCOne™ Software.

$$Flowrate_{effective} = Flowrate_{nominal} \times \frac{FlowMarker_{Calibration}}{FlowMarker_{Observed}} \quad \text{(EQ7)}$$

The Crystallization Elution Fractionation (CEF) technology is conducted according to Monrabal et al, Macromol. Symp. 257, 71-79 (2007). The CEF instrument is equipped with an IR-4 or IR-5 detector (such as that sold commercially from PolymerChar, Spain) and a two angle light scattering detector Model 2040 (such as those sold commercially from Precision Detectors). A 10 micron guard column of 50 mm x 4.6 mm (such as that sold commercially from PolymerLabs) is installed before the IR-4 or IR-5 detector in the detector oven. Ortho-dichlorobenzene (ODCB, 99% anhydrous grade) and 2,5-di-tert-butyl-4-methylphenol (BHT) (such as commercially available from Sigma-Aldrich) are obtained. Silica gel 40 (particle size 0.2-0.5 mm) (such as commercially available from EMD Chemicals) is also obtained. The silica gel is dried in a vacuum oven at 160°C for at least two hours before use. ODCB is sparged with dried nitrogen ($N_2$) for one hour before use. Dried nitrogen is obtained by passing nitrogen at <90 psig over $CaCO_3$ and 5Å molecular sieves. ODCB is further dried by adding five grams of the dried silica to two liters of ODCB or by pumping through a column or columns packed with dried silica between 0.1ml/min to 1.0ml/min. Eight hundred milligrams of BHT are added to two liters of ODCB if no inert gas such as $N_2$ is used in purging the sample vial. Dried ODCB with or without BHT is hereinafter referred to as "ODCB-m." A sample solution is prepared by, using the autosampler, dissolving a polymer sample in ODCB-m at 4 mg/ml under shaking at 160°C for 2 hours. 300 µL of the sample solution is injected into the column. The temperature profile of CEF is: crystallization at 3°C/min from 110°C to 30°C, thermal equilibrium at 30°C for 5 minutes (including Soluble Fraction Elution Time being set as 2 minutes), and elution at 3°C/min from 30°C to 140°C. The flow rate during crystallization is 0.052 ml/min. The flow rate during elution is 0.50 ml/min. The IR-4 or IR-5 signal data is collected at one data point/second.

The CEF column is packed with glass beads at 125 µm ± 6% (such as those commercially available with acid wash from MO-SCI Specialty Products) with 1/8 inch stainless tubing according to U.S. 8,372,931. The internal liquid

volume of the CEF column is between 2.1 ml and 2.3 ml. Temperature calibration is performed by using a mixture of NIST Standard Reference Material linear polyethylene 1475a (1.0 mg/ml) and Eicosane (2 mg/ml) in ODCB-m. The calibration consists of four steps: (1) calculating the delay volume defined as the temperature offset between the measured peak elution temperature of Eicosane minus 30.00°C; (2) subtracting the temperature offset of the elution temperature from the CEF raw temperature data. It is noted that this temperature offset is a function of experimental conditions, such as elution temperature, elution flow rate, etc.; (3) creating a linear calibration line transforming the elution temperature across a range of 30.00°C and 140.00°C such that NIST linear polyethylene 1475a has a peak temperature at 101.00°C, and Eicosane has a peak temperature of 30.00°C, (4) for the soluble fraction measured isothermally at 30°C, the elution temperature is extrapolated linearly by using the elution heating rate of 3°C/min. The reported elution peak temperatures are obtained such that the observed comonomer content calibration curve agrees with those previously reported in USP 8,372,931.

The weight percentage of purge fraction (PF; Wt1), copolymer component (Wt2), and high density fraction (HDF; Wt3) are defined as polymer peaks in the following 3 temperature ranges: 25 - 34.5, 34.5 - 92, and 92 - 120°C, respectively. Tp2 and Tp3 are the peak temperatures of the copolymer and HDF in the CEF, respectively.

*Procatalyst Compositions*

The following materials and procedures are used for the preparation of the sample procatalyst compositions of the present disclosure.

Magnesium halide support: Each of the sample procatalyst compositions of the present disclosure is prepared beginning first with preparation of a magnesium halide support. The magnesium halide support is prepared as follows. A 20% n-butylethylmagnesium solution in heptane is diluted into 0.20 M using Isopar E available from Exxon. HCl is slowly added to the n-butylethylmagnesium solution with agitation at 30°C until the Cl/Mg ratio reaches 2.04. The temperature of the reaction mixture is maintained at 30±3°C throughout the reaction. A $MgCl_2$ slurry is obtained without separating solid from liquid.

Starting Procatalysts: Following preparation of the magnesium halide support, five starting procatalysts (PCAT-1, PCAT-2, PCAT-3, PCAT-4, and PCAT-5) are prepared as "precursors" (i.e., working catalysts prior to treatment by electron donor modifiers) for the sample procatalysts compositions of the present disclosure. The five starting procatalysts are prepared as follows:

Starting Procatalyst 1 ("PCAT-1"): A 15% ethylaluminum dichloride (EADC) solution in heptane is slowly added to the aforementioned $MgCl_2$ slurry at 30°C with agitation until the EADC/Mg ratio reaches 0.3. The temperature of the reaction mixture is maintained at 30±3°C during the addition. The mixture is allowed to age at 30°C for 4 hours. Subsequently, a 51% titanium(IV) isopropoxide solution in heptane is slowly added to the mixture at 30°C with agitation until the Ti/Mg ratio reaches 0.075. The temperature of the reaction mixture is maintained at 30±3°C during the addition. The mixture is allowed to age at 30°C for at least 8 hours. Isopar E solvent is used for rinsing for ensuring the accuracy of the catalyst formulation. The final Ti concentration for the finished catalyst is 0.12 M.

Starting Procatalyst 2 ("PCAT-2"): Added slowly to the aforementioned $MgCl_2$ slurry is an ethylaluminum dichloride (EADC) solution in heptane (EADC/$MgCl_2$ = 12/40). After the mixture is allowed to react at ambient temperature with stirring overnight, a freshly prepared mixture of TiCl4 and $VOCl_3$ in Isopar E is introduced slowly ($TiCl_4$/$VOCl_3$/$MgCl_2$ = 3.5/2.0/40). The mixture is again stirred at ambient temperature overnight.

Starting Procatalyst 3 ("PCAT-3"): Added slowly to the aforementioned $MgCl_2$ slurry is an ethylaluminum dichloride (EADC) solution in heptane (EADC/$MgCl_2$ = 12/40). After the mixture is allowed to react at ambient temperature with stirring overnight, a freshly prepared mixture of TiCl4 and $VOCl_3$ in Isopar E is introduced slowly ($TiCl_4$/$VOCl_3$/$MgCl_2$ = 3.5/2.0/40), closely followed by a tetrakis(2,2,6,6-tetramethyl-3,5-heptanedionato)zirconium, ($Zr(TMHD)_4$) solution in Isopar E ($Zr(TMHD)_4$/$MgCl_2$ = 0.5/40). The mixture is stirred overnight.

Starting Procatalyst 4 ("PCAT-4"): Added slowly to the aforementioned $MgCl_2$ slurry is an ethylaluminum dichloride (EADC) solution in heptane (EADC/$MgCl_2$ = 16/40). After the mixture is allowed to react at ambient temperature with stirring overnight, a freshly prepared mixture of $TiCl_4$ and $VOCl_3$ in Isopar E is introduced slowly ($TiCl_4$/$VOCl_3$/$MgCl_2$ = 5.0/2.0/40). The mixture is again stirred at ambient temperature overnight.

Starting Procatalyst 5 ("PCAT-5"): Added slowly to the aforementioned $MgCl_2$ slurry is an ethylaluminum dichloride (EADC) solution in heptane (EADC/$MgCl_2$ = 10/40). After the mixture is allowed to react at ambient temperature with stirring overnight, a freshly prepared mixture of $TiCl_4$ and $VOCl_3$ in Isopar E is introduced slowly ($TiCl_4$/$VOCl_3$/$MgCl_2$ = 1/2/40), closely followed by a tetrakis(2,2,6,6-tetramethyl-3,5-heptanedionato)zirconium, ($Zr(TMHD)_4$) solution in Isopar E ($Zr(TMHD)_4$/$MgCl_4$ = 0.5/40). The mixture is stirred overnight.

It should be noted that the Isopar E solvent used as a diluent for preparing the magnesium halide support remains as part of the slurry for each of the finished starting procatalysts. Accordingly, each of the starting procatalysts is made via a one-pot synthesis with no separation or purification of any component.

Electron Donor Modifiers: To form the sample procatalyst compositions of the present disclosure, each of the

five starting procatalysts is treated with an electron donor modifier by slowly adding an electron donor modifier solution in Isopar E to the starting procatalyst with agitation at ambient temperature. The reaction mixtures are allowed to age for at least 12 hours before use. In other words, to form the sample procatalyst compositions of the present disclosure, the electron donor modifiers are added directly to the starting procatalysts with the intention of modifying existing catalyst active sites. Electron donor modifiers A to K, as shown in Table 1, are used in the examples of the present disclosure.

**Table 1**

| Donor # | Name | Structure |
|---|---|---|
| **A** | 4,4-bis(methoxymethyl)-2,6-dimethyl heptane | 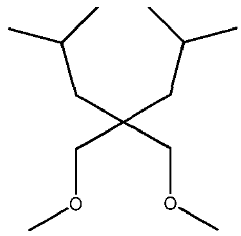 |
| **B** | 1,2-dimethoxyethane | 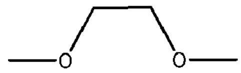 |
| **C** | 1,2-dimethoxybenzene | 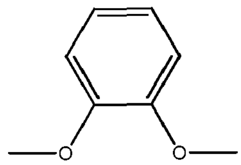 |
| **D** | 2-isobutyl-2-(methoxymethyl)-4-methylpentan-1-ol | 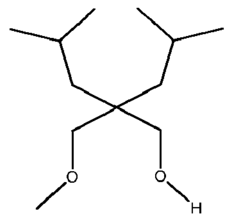 |
| **E** | 2,2-diisobutylpropane-1,3-diol | 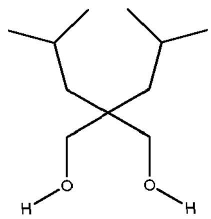 |
| **F** | 1,3-dimethoxy-2,2-dimethylpropane | 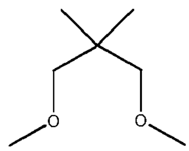 |
| **G** | **1,** 3-dimethoxy-2,2,4-trimethy lpentane | 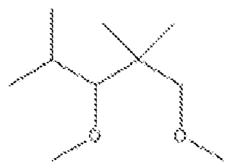 |

(continued)

| Donor # | Name | Structure |
|---|---|---|
| H | 2,2,6,6-tetramethyl-3,5-heptanedone | 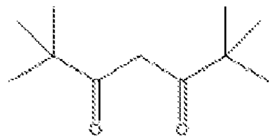 |
| I | 9,9-bis(methoxymethyl)-9H-fluorene | 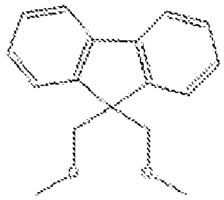 |
| J | Irganox 1010 | 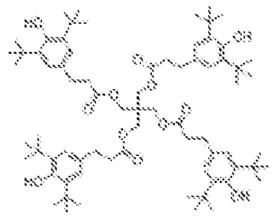 |
| K | dicydopentyldimethoxysilane | 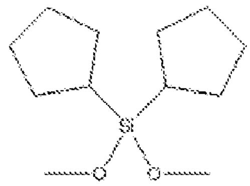 |

Twenty-five sample procatalyst compositions are prepared and used in the examples disclosed herein based on combinations of the five starting procatalysts with electron donor modifiers A to K. The formulations for these sample procatalyst compositions are outlined below in Table 2.

**Table 2**

| Procatalyst Composition | Starting Procatalyst | $MgCl_2$ (mol) | EADC (mol) | Ti(O-i-Pr)$_4$ (mol) | TiCl4 (mol) | $VOCl_3$ (mol) | Zr(TMHD)$_4$ (mol) | Electron Donor Modifier | Electron Donor Modifier (mol) | Donor/Ti (mol/mol) |
|---|---|---|---|---|---|---|---|---|---|---|
| PCAT-1-A | PCAT-1 | 40 | 12 | 3 | -- | -- | -- | A | 3 | 1 |
| PCAT-1-B | PCAT-1 | 40 | 12 | 3 | -- | -- | -- | B | 3 | 1 |
| PCAT-1-C | PCAT-1 | 40 | 12 | 3 | -- | -- | -- | C | 3 | 1 |
| PCAT-1-J | PCAT-1 | 40 | 12 | 3 | -- | -- | -- | J | 3 | 1 |
| PCAT-1-K | PCAT-1 | 40 | 12 | 3 | -- | - | -- | K | 1.5 | 0.5 |
| PCAT-1-K | PCAT-1 | 40 | 12 | 3 | -- | -- | -- | K | 3 | 1 |
| PCAT-1-K | PCAT-1 | 40 | 12 | 3 | -- | -- | -- | K | 4.5 | 1.5 |
| PCAT-1-K | PCAT-1 | 40 | 12 | 3 | -- | -- | -- | K | 6 | 2 |
| PCAT-1-K | PCAT-1 | 40 | 12 | 3 | -- | -- | -- | K | 9 | 3 |
| PCAT-2-A | PCAT-2 | 40 | 12 | -- | 3.5 | 2 | -- | A | 3.5 | 1 |
| PCAT-2-B | PCAT-2 | 40 | 12 | -- | 3.5 | 2 | -- | B | 3.5 | 1 |
| PCAT-2-C | PCAT-2 | 40 | 12 | -- | 3.5 | 2 | -- | C | 3.5 | 1 |
| PCAT-2-D | PCAT-2 | 40 | 12 | -- | 3.5 | 2 | -- | D | 3.5 | 1 |
| PCAT-2-E | PCAT-2 | 40 | 12 | -- | 3.5 | 2 | -- | E | 3.5 | 1 |
| PCAT-2-F | PCAT-2 | 40 | 12 | -- | 3.5 | 2 | -- | F | 3.5 | 1 |
| PCAT-2-G | PCAT-2 | 40 | 12 | -- | 3.5 | 2 | -- | G | 3.5 | 1 |
| PCAT-2-H | PCAT-2 | 40 | 12 | -- | 3.5 | 2 | -- | H | 3.5 | 1 |
| PCAT-2-I | PCAT-2 | 40 | 12 | -- | 3.5 | 2 | -- | I | 3.5 | 1 |
| PCAT-3-A | PCAT-3 | 40 | 12 | -- | 3.5 | 2 | 0.5 | A | 3.5 | 1 |
| PCAT-3-B | PCAT-3 | 40 | 12 | -- | 3.5 | 2 | 0.5 | B | 3.5 | 1 |
| PCAT-3-C | PCAT-3 | 40 | 12 | -- | 3.5 | 2 | 0.5 | C | 3.5 | 1 |
| PCAT-4-A | PCAT-4 | 40 | 16 | -- | 5 | 2 | -- | A | 5 | 1 |
| PCAT-4-B | PCAT-4 | 40 | 16 | -- | 5 | 2 | -- | B | 5 | 1 |
| PCAT-4-C | PCAT-4 | 40 | 16 | -- | 5 | 2 | -- | C | 5 | 1 |

(continued)

| Procatalyst Composition | Starting Procatalyst | $MgCl_2$ (mol) | EADC (mol) | $Ti(O\text{-}i\text{-}Pr)_4$ (mol) | TiCl4 (mol) | $VOCl_3$ (mol) | $Zr(TMHD)_4$ (mol) | Electron Donor Modifier | Electron Donor Modifier (mol) | Donor/Ti (mol/mol) |
|---|---|---|---|---|---|---|---|---|---|---|
| PCAT-5-C | PCAT-5 | 40 | 10 | -- | 1 | 2 | 0.5 | C | 1 | 1 |

*Batch Reactor Polymerization*

The first 24 sample procatalyst compositions are evaluated in batch reactor polymerization.

Standard runs of batch reactor polymerization are performed in a stirred one-gallon reactor, which is charged with 250 g of 1-octene and 1330 g of Isopar E (with a total amount of 1580 g). The reactor is heated to 190°C and then saturated with ethylene in the presence of 40 mmol of hydrogen. Starting procatalyst, cocatalyst (triethylaluminum (TEA)), and, optionally, an electron donor modifier solution in Isopar E are mixed and immediately added to the reactor. The reactor pressure is maintained at 450 psi with ethylene flow to compensate ethylene consumption during the polymerization. After 10 minutes reaction time, the bottom valve of the reactor is opened and the content in the reactor is transferred to a glass kettle. Afterwards, the mixture is poured onto a Mylar lined pan, cooled, and allowed to stand in a fume hood overnight to remove most of the solvent via evaporation. The resin is then dried in a vacuum oven.

In addition to the standard runs, octene sweeps are performed for the sample procatalyst compositions. The polymerization conditions for the octene sweeps are identical to the polymerization conditions of the standard runs, except that the amounts of 1-octene and Isopar E vary. The amount of 1-octene added ranges from 0 to 800 g, and the amount of Isopar E varies accordingly such that the total amount of 1-octene and Isopar E is held constant at 1580 g.

Results of the batch reactor polymerization evaluations (standard runs and octene sweeps) are provided below in Tables 3-8. Examples marked with asterisks are comparative examples. Examples not marked with asterisks are working examples of the present disclosure.

Catalyst efficiency ("Eff") is calculated based on the amount of ethylene consumed during the polymerization per g of Ti used in the procatalyst composition (g/g Ti). CEF data is also provided for the examples. Specifically, Wt1 refers to the purge fraction (PF), Wt2 refers to the copolymer component, and Wt3 refers to the high density fraction (HDF). Purge fraction, copolymer component, and high density fraction were defined as polymer peaks in 3 temperature ranges: 25-34.5, 34.5-92, and 92-120 °C, respectively. The results below also provide the HDF peak temperature (Tp3) and the copolymer peak temperature (Tp2). The weight average molecular weight (Mw) of the polymer from GPC is also provided.

## Table 3

| Example | Procatalyst | Ti Loading (mmol) | TEA/Ti (mol/mol) | 1-Octene (g) | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|---|
| 1* | PCAT-1 | 0.0030 | 6 | 0 | 471123 | 0.9523 | 127673 | 0.6 | 3.9 | 95.5 | | 101.6 |
| 2* | PCAT-1 | 0.0030 | 6 | 50 | 340245 | 0.9373 | 105591 | 0.4 | 19.4 | 80.2 | 86.0 | 98.8 |
| 3* | PCAT-1 | 0.0030 | 6 | 100 | 331102 | 0.9309 | 100794 | 0.9 | 44.2 | 54.9 | 86.0 | 98.4 |
| 4* | PCAT-1 | 0.0030 | 6 | 250 | 254424 | | 90605 | 5.8 | 67.1 | 27.1 | 82.3 | 98.4 |
| 5* | PCAT-1 | 0.0030 | 6 | 300 | 254227 | | 87973 | 12.8 | 67.7 | 19.6 | 78.2 | 98.3 |
| 6* | PCAT-1 | 0.0030 | 6 | 350 | 245539 | 0.9115 | 85064 | 14.1 | 67.3 | 18.7 | 74.4 | 98.5 |
| 7* | PCAT-1 | 0.0030 | 6 | 400 | 248676 | 0.9091 | 84592 | 15.3 | 67.0 | 17.8 | 69.6 | 98.4 |
| 8* | PCAT-1 | 0.0030 | 6 | 500 | 373247 | 0.9013 | 81942 | 25.6 | 58.6 | 15.8 | 63.6 | 98.6 |
| 9* | PCAT-1 | 0.0030 | 6 | 550 | 359907 | 0.9000 | 76756 | 24.8 | 58.8 | 16.4 | 60.9 | 98.6 |
| 10* | PCAT-1 | 0.0030 | 6 | 600 | 356579 | 0.8984 | 75497 | 34.0 | 51.4 | 14.6 | 59.0 | 98.4 |
| | | | | | | | | | | | | |
| 11* | PCAT-1-A | 0.0100 | 6 | 0 | 102806 | 0.9525 | 145333 | 0.8 | 0.0 | 99.2 | | 102.0 |
| 12 | PCAT-1-A | 0.0100 | 6 | 150 | 90955 | 0.9368 | 132704 | 1.3 | 20.2 | 78.5 | 86.0 | 100.2 |
| 13 | PCAT-1-A | 0.0100 | 6 | 200 | 80808 | 0.9309 | 130860 | 1.6 | 30.1 | 68.3 | 85.9 | 100.0 |
| 14 | PCAT-1-A | 0.0100 | 6 | 250 | 81812 | 0.9306 | 127766 | 3.8 | 33.8 | 62.4 | 85.8 | 100.0 |
| 15 | PCAT-1-A | 0.0100 | 6 | 400 | 70706 | | 125633 | 7.1 | 37.0 | 56.0 | 84.2 | 99.9 |
| 16 | PCAT-1-A | 0.0100 | 6 | 450 | 76206 | 0.9242 | 123403 | 9.2 | 37.2 | 53.6 | 84.6 | 99.9 |
| 17 | PCAT-1-A | 0.0100 | 6 | 500 | 72688 | 0.9192 | 120935 | 11.9 | 37.3 | 50.8 | 85.7 | 99.9 |
| 18 | PCAT-1-A | 0.0100 | 6 | 600 | 66773 | 0.9173 | 121550 | 10.2 | 42.6 | 47.3 | 85.0 | 99.6 |
| 19 | PCAT-1-A | 0.0100 | 6 | 650 | 66489 | 0.9170 | 122918 | 11.8 | 40.3 | 47.9 | 85.0 | 99.6 |
| 20 | PCAT-1-A | 0.0100 | 6 | 700 | 64560 | 0.9170 | 119942 | 20.1 | 39.6 | 40.3 | 83.3 | 99.5 |
| | | | | | | | | | | | | |
| 21* | PCAT-1-B | 0.0150 | 6 | 0 | 42505 | 0.9497 | 108470 | 2.7 | 1.3 | 95.9 | | 101.7 |
| 22* | PCAT-1-B | 0.0150 | 6 | 150 | 35288 | 0.9229 | 89117 | 3.6 | 56.5 | 39.9 | 84.6 | 99.0 |
| 23* | PCAT-1-B | 0.0150 | 6 | 200 | 23232 | 0.9201 | 82559 | 4.0 | 64.3 | 31.6 | 81.2 | 98.8 |
| 24* | PCAT-1-B | 0.0150 | 6 | 250 | 29772 | 0.9175 | 84377 | 4.8 | 67.1 | 28.1 | 78.0 | 99.0 |
| 25* | PCAT-1-B | 0.0150 | 6 | 400 | 30966 | 0.9122 | 80571 | 10.0 | 67.4 | 22.6 | 63.3 | 99.1 |
| 26* | PCAT-1-B | 0.0150 | 6 | 450 | 26377 | 0.9082 | 78128 | 12.1 | 66.1 | 21.8 | 60.0 | 99.2 |
| 27* | PCAT-1-B | 0.0150 | 6 | 500 | 25432 | 0.9072 | 79893 | 21.4 | 59.3 | 19.4 | 56.1 | 99.0 |
| 28* | PCAT-1-B | 0.0150 | 6 | 550 | 25373 | 0.9065 | 78794 | 25.7 | 55.5 | 18.8 | 54.6 | 99.1 |
| 29* | PCAT-1-B | 0.0150 | 6 | 600 | 23413 | 0.9042 | 77898 | 31.4 | 50.3 | 18.3 | 53.8 | 99.2 |
| 30* | PCAT-1-B | 0.0150 | 6 | 650 | 20198 | 0.9000 | 76434 | 39.5 | 42.7 | 17.9 | 54.0 | 99.2 |
| 31* | PCAT-1-B | 0.0150 | 6 | 700 | 22668 | 0.9002 | 78362 | 35.7 | 45.0 | 19.3 | 55.3 | 99.3 |
| | | | | | | | | | | | | |
| 32* | PCAT-1-C | 0.0010 | 6 | 0 | 95513 | 0.9507 | 136003 | 0.7 | 0.0 | 99.3 | | 101.9 |
| 33* | PCAT-1-C | 0.0010 | 6 | 150 | 90715 | 0.9268 | 122001 | 2.5 | 48.3 | 49.2 | 87.6 | 99.1 |
| 34* | PCAT-1-C | 0.0010 | 6 | 200 | 95387 | 0.9181 | 119022 | 4.0 | 56.6 | 39.3 | 86.0 | 99.0 |
| 35* | PCAT-1-C | 0.0010 | 6 | 250 | 104269 | 0.9172 | 119249 | 3.3 | 60.7 | 36.0 | 83.6 | 99.0 |
| 36* | PCAT-1-C | 0.0010 | 6 | 400 | 101895 | 0.9096 | 110156 | 11.2 | 63.7 | 25.1 | 73.4 | 99.1 |
| 37* | PCAT-1-C | 0.0010 | 6 | 450 | 96732 | 0.9069 | 110836 | 18.7 | 60.4 | 20.9 | 69.2 | 98.9 |
| 38* | PCAT-1-C | 0.0010 | 6 | 550 | 95676 | 0.9003 | 108850 | 18.5 | 60.2 | 21.3 | 64.9 | 99.0 |
| 39* | PCAT-1-C | 0.0010 | 6 | 600 | 97962 | 0.8964 | 110020 | 20.7 | 58.3 | 21.0 | 64.0 | 98.9 |
| 40* | PCAT-1-C | 0.0010 | 6 | 650 | 90657 | 0.8952 | 111223 | 32.4 | 50.2 | 17.3 | 59.4 | 98.8 |
| 41* | PCAT-1-C | 0.0010 | 6 | 700 | 85040 | 0.8959 | 108834 | 25.1 | 54.2 | 20.6 | 58.9 | 99.0 |

As seen in Table 3, octene sweeps of 0 to 700 g of 1-octene are performed for procatalyst compositions PCAT-1-A, PCAT-1-B, and PCAT-1-C, as well as for the starting procatalyst PCAT-1 without treatment of electron donor modifiers.

## Table 4

| Example | Procatalyst | Ti Loading (mmol) | TEA/Ti (mol/mol) | 1-Octene (g) | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|---|
| 42* | PCAT-2 | 0.0030 | 10 | 0 | 539314 | 0.9484 | 142777 | 0.8 | 1.2 | 98.0 | | 101.7 |
| 43* | PCAT-2 | 0.0030 | 10 | 100 | 610393 | 0.9301 | 115820 | 1.0 | 38.7 | 60.4 | 86.0 | 98.7 |
| 44* | PCAT-2 | 0.0023 | 10 | 200 | 614808 | 0.9211 | 90147 | 2.5 | 63.0 | 34.6 | 84.8 | 98.3 |
| 45* | PCAT-2 | 0.0023 | 10 | 300 | 671732 | 0.9094 | 106165 | 7.2 | 67.0 | 25.8 | 81.3 | 98.3 |
| 46* | PCAT-2 | 0.0023 | 10 | 400 | 525265 | 0.9038 | 101498 | 14.1 | 60.9 | 25.0 | 75.6 | 98.6 |
| 47* | PCAT-2 | 0.0023 | 10 | 500 | 402609 | 0.8954 | 97186.8 | 26.7 | 53.6 | 19.6 | 66.1 | 98.5 |
| 48* | PCAT-2 | 0.0023 | 10 | 600 | 294894 | 0.8851 | 93908.4 | 27.2 | 53.3 | 19.5 | 61.8 | 98.5 |
| 49* | PCAT-2 | 0.0023 | 10 | 700 | 201499 | 0.8892 | 90362.1 | 34.6 | 48.2 | 17.3 | 57.8 | 98.5 |
| | | | | | | | | | | | | |
| 50* | PCAT-2-A | 0.0100 | 10 | 0 | 170877 | 0.9509 | 144080 | 0.5 | 1.5 | 98.0 | | 101.5 |
| 51 | PCAT-2-A | 0.0069 | 10 | 100 | 233432 | 0.9389 | 132852 | 1.0 | 14.1 | 84.9 | 86.0 | 100.2 |
| 52 | PCAT-2-A | 0.0069 | 10 | 200 | 269705 | 0.9328 | 134467 | 2.5 | 31.5 | 66.0 | 85.9 | 99.7 |
| 53 | PCAT-2-A | 0.0069 | 10 | 300 | 228227 | 0.9289 | 128418 | 8.1 | 35.5 | 56.4 | 85.6 | 99.6 |
| 54 | PCAT-2-A | 0.0069 | 10 | 400 | 188415 | 0.9244 | 124735 | 5.1 | 41.0 | 53.9 | 85.1 | 99.5 |
| 55 | PCAT-2-A | 0.0069 | 10 | 500 | 163764 | 0.9223 | 121590 | 12.2 | 40.4 | 47.4 | 85.1 | 99.6 |
| 56 | PCAT-2-A | 0.0069 | 10 | 600 | 145720 | 0.9198 | 116648 | 12.2 | 45.0 | 42.8 | 85.0 | 99.6 |
| 57 | PCAT-2-A | 0.0069 | 10 | 700 | 135282 | 0.9170 | 121881 | 13.6 | 42.9 | 43.4 | 84.5 | 99.5 |
| | | | | | | | | | | | | |
| 58* | PCAT-2-B | 0.0058 | 10 | 0 | 190728 | 0.9487 | 129941 | 1.4 | 6.0 | 92.6 | | 101.2 |
| 59* | PCAT-2-B | 0.0069 | 10 | 100 | 146016 | 0.9327 | 108918 | 0.6 | 34.7 | 64.7 | 86.0 | 99.2 |
| 60* | PCAT-2-B | 0.0069 | 10 | 200 | 90597 | 0.9211 | 104840 | 4.7 | 55.0 | 40.3 | 84.5 | 99.0 |
| 61* | PCAT-2-B | 0.0069 | 10 | 300 | 77116 | 0.9128 | 101780 | 7.7 | 60.6 | 31.7 | 81.2 | 99.1 |
| 62* | PCAT-2-B | 0.0081 | 10 | 400 | 68310 | 0.9055 | 96613.7 | 14.6 | 57.0 | 28.4 | 73.0 | 99.0 |
| 63* | PCAT-2-B | 0.0081 | 10 | 500 | 49670 | 0.9019 | 91514.9 | 38.6 | 43.4 | 18.0 | 61.3 | 98.9 |
| 64* | PCAT-2-B | 0.0081 | 10 | 600 | 74866 | 0.8945 | 92856 | 39.4 | 42.2 | 18.3 | 57.1 | 98.9 |
| 65* | PCAT-2-B | 0.0081 | 10 | 700 | 69458 | 0.8939 | 91059.1 | 48.3 | 36.3 | 15.4 | 56.8 | 98.9 |
| | | | | | | | | | | | | |
| 66* | PCAT-2-C | 0.0081 | 10 | 0 | 294293 | | 137697 | 1.3 | 1.7 | 97.0 | | 101.1 |
| 67* | PCAT-2-C | 0.0058 | 10 | 100 | 294930 | 0.9311 | 119800 | 1.4 | 31.5 | 67.1 | 86.0 | 99.4 |
| 68* | PCAT-2-C | 0.0058 | 10 | 200 | 232442 | 0.9232 | 117080 | 3.7 | 50.7 | 45.6 | 85.4 | 99.0 |
| 69* | PCAT-2-C | 0.0058 | 10 | 300 | 238742 | 0.9096 | 111892 | 8.3 | 57.1 | 34.6 | 83.7 | 98.9 |
| 70* | PCAT-2-C | 0.0058 | 10 | 400 | 266183 | 0.9076 | 108527 | 12.7 | 58.5 | 28.8 | 82.5 | 98.9 |
| 71* | PCAT-2-C | 0.0058 | 10 | 500 | 274129 | 0.8944 | 107677 | 19.9 | 56.3 | 23.7 | 67.4 | 99.1 |
| 72* | PCAT-2-C | 0.0058 | 10 | 700 | 203092 | 0.8914 | 100269 | 35.7 | 47.1 | 17.2 | 63.6 | 99.0 |
| | | | | | | | | | | | | |

As seen in Table 4, octene sweeps of 0 to 700 g of 1-octene are performed for procatalyst compositions PCAT-2-A, PCAT-2-B, and PCAT-2-C, as well as for the starting procatalyst PCAT-2 without treatment of electron donor modifiers.

## Table 5

| Example | Procatalyst | Ti Loading (mmol) | TEA/Ti (mol/mol) | 1-Octene (g) | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|---|
| 73* | PCAT-3 | 0.0030 | 10 | 0 | 208918 | 0.9462 | 138570 | 1.8 | 5.2 | 92.9 | | 101.0 |
| 74* | PCAT-3 | 0.0030 | 10 | 100 | 186151 | 0.9318 | 117023 | 1.3 | 36.6 | 62.0 | 85.9 | 99.3 |
| 75* | PCAT-3 | 0.0030 | 10 | 200 | 177975 | 0.9234 | 112074 | 2.6 | 55.6 | 41.8 | 84.9 | 99.1 |
| 76* | PCAT-3 | 0.0030 | 10 | 300 | 166566 | 0.9168 | 103685 | 13.5 | 57.7 | 28.8 | 82.7 | 99.1 |
| 77* | PCAT-3 | 0.0030 | 10 | 400 | 396676 | 0.9136 | 103636 | 10.2 | 62.0 | 27.8 | 82.0 | 99.2 |
| 78* | PCAT-3 | 0.0030 | 10 | 500 | 429241 | 0.9068 | 97291.5 | 12.8 | 61.7 | 25.5 | 81.8 | 99.1 |
| 79* | PCAT-3 | 0.0030 | 10 | 600 | 362441 | 0.9019 | 92830.4 | 34.1 | 47.6 | 18.4 | 64.7 | 99.0 |
| | | | | | | | | | | | | |
| 80* | PCAT-3-A | 0.0058 | 10 | 0 | 195366 | 0.9471 | 121445 | 1.3 | 3.8 | 94.9 | | 101.3 |
| 81 | PCAT-3-A | 0.0030 | 10 | 100 | 215359 | 0.9369 | 133689 | 1.3 | 23.1 | 75.6 | 86.0 | 100.1 |
| 82 | PCAT-3-A | 0.0030 | 10 | 200 | 214610 | 0.9310 | 125387 | 2.1 | 35.0 | 62.9 | 85.9 | 100.0 |
| 83 | PCAT-3-A | 0.0030 | 10 | 300 | 184554 | 0.9279 | 122480 | 7.5 | 41.7 | 50.8 | 85.6 | 100.0 |
| 84 | PCAT-3-A | 0.0030 | 10 | 400 | 175279 | 0.9236 | 124404 | 5.0 | 44.8 | 50.2 | 84.8 | 99.9 |
| 85 | PCAT-3-A | 0.0030 | 10 | 500 | 157033 | 0.9199 | 117374 | 17.7 | 44.2 | 38.1 | 84.4 | 99.6 |
| 86 | PCAT-3-A | 0.0030 | 10 | 600 | 141614 | 0.9173 | 110354 | 31.5 | 37.9 | 30.6 | 83.3 | 99.5 |
| 87 | PCAT-3-A | 0.0030 | 10 | 700 | 117198 | 0.9130 | 118288 | 35.5 | 34.7 | 29.8 | 83.8 | 99.4 |
| | | | | | | | | | | | | |
| 88* | PCAT-3-B | 0.0092 | 10 | 0 | 85888 | 0.9532 | 129811 | 0.8 | 1.8 | 97.3 | | 101.8 |
| 89* | PCAT-3-B | 0.0092 | 10 | 100 | 73909 | 0.9345 | 110592 | 1.0 | 33.2 | 65.7 | 86.0 | 99.5 |
| 90* | PCAT-3-B | 0.0115 | 10 | 200 | 60527 | 0.9279 | 105843 | 4.3 | 51.1 | 44.6 | 84.0 | 99.2 |
| 91* | PCAT-3-B | 0.0115 | 10 | 300 | 78489 | 0.9220 | 98319.8 | 6.4 | 58.8 | 34.8 | 81.9 | 99.2 |
| 92* | PCAT-3-B | 0.0115 | 10 | 400 | 60327 | 0.9161 | 83894.7 | 16.6 | 54.4 | 29.0 | 82.7 | 99.3 |
| 93* | PCAT-3-B | 0.0115 | 10 | 500 | 42820 | 0.9085 | 90931 | 28.2 | 49.1 | 22.7 | 63.3 | 99.3 |
| 94* | PCAT-3-B | 0.0115 | 10 | 700 | 38937 | 0.9013 | 85860.8 | 32.2 | 43.7 | 24.1 | 80.9 | 99.2 |
| | | | | | | | | | | | | |
| 95* | PCAT-3-C | 0.0115 | 10 | 0 | 319038 | | 125265 | 0.7 | 2.1 | 97.2 | | 100.9 |
| 96* | PCAT-3-C | 0.0058 | 10 | 100 | 263112 | 0.9287 | 121783 | 1.4 | 36.6 | 62.0 | 86.0 | 99.1 |
| 97* | PCAT-3-C | 0.0058 | 10 | 200 | 334587 | 0.9219 | 120163 | 4.0 | 54.3 | 41.7 | 84.3 | 99.2 |
| 98* | PCAT-3-C | 0.0058 | 10 | 300 | 309197 | 0.9172 | 110129 | 9.5 | 56.9 | 33.5 | 82.7 | 99.0 |
| 99* | PCAT-3-C | 0.0058 | 10 | 400 | 263758 | 0.9118 | 103519 | 14.2 | 58.9 | 26.9 | 80.2 | 99.2 |
| 100* | PCAT-3-C | 0.0058 | 10 | 500 | 289033 | 0.9055 | 104340 | 16.3 | 59.4 | 24.3 | 66.4 | 99.1 |
| 101* | PCAT-3-C | 0.0058 | 10 | 600 | 269341 | 0.8965 | 93752.7 | 32.6 | 49.1 | 18.3 | 63.9 | 99.1 |
| 102* | PCAT-3-C | 0.0058 | 10 | 700 | 251499 | 0.8949 | 82240 | 53.0 | 34.1 | 12.9 | 62.6 | 99.0 |

As seen in Table 5, octene sweeps of 0 to 700 g of 1-octene are performed for procatalyst compositions PCAT-3-A, PCAT-3-B, and PCAT-3-C, as well as for the starting procatalyst PCAT-3 without treatment of electron donor modifiers.

## Table 6

| Example | Procatalyst | Ti Loading (mmol) | TEA/Ti (mol/mol) | 1-Octene (g) | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|---|
| 103* | PCAT-4 | 0.0033 | 10 | 0 | 232731 | 0.9506 | 128834 | 0.6 | 3.8 | 95.7 | | 101.6 |
| 104* | PCAT-4 | 0.0033 | 10 | 100 | 239576 | 0.9340 | 102001 | 0.7 | 31.4 | 67.8 | 86.0 | 99.7 |
| 105* | PCAT-4 | 0.0033 | 10 | 200 | 300520 | 0.9268 | 98974.8 | 3.8 | 53.3 | 43.0 | 85.3 | 99.4 |
| 106* | PCAT-4 | 0.0033 | 10 | 300 | 227657 | 0.9212 | 98239.6 | 3.4 | 59.0 | 37.6 | 83.7 | 99.4 |
| 107* | PCAT-4 | 0.0033 | 10 | 400 | 155506 | 0.9157 | 95283.8 | 12.1 | 60.4 | 27.4 | 80.8 | 99.2 |
| 108* | PCAT-4 | 0.0033 | 10 | 600 | 147035 | 0.9057 | 95417.1 | 28.7 | 50.2 | 21.0 | 66.7 | 99.1 |
| 109* | PCAT-4 | 0.0033 | 10 | 700 | 154527 | 0.8986 | 88428.9 | 33.9 | 46.4 | 19.7 | 64.6 | 99.1 |
| 110* | PCAT-4 | 0.0033 | 10 | 800 | 143983 | 0.8929 | 78197 | 47.4 | 37.3 | 15.3 | 63.8 | 99.0 |
| | | | | | | | | | | | | |
| 111* | PCAT-4-A | 0.0077 | 10 | 0 | 85996 | 0.9518 | 146528 | 1.8 | 1.7 | 96.4 | | 102.1 |
| 112 | PCAT-4-A | 0.0077 | 10 | 100 | 101108 | 0.9405 | 131418 | 1.1 | 17.8 | 81.1 | 86.0 | 100.4 |
| 113 | PCAT-4-A | 0.0077 | 10 | 200 | 77497 | 0.9354 | 129004 | 2.6 | 31.7 | 65.7 | 86.0 | 100.0 |
| 114 | PCAT-4-A | 0.0077 | 10 | 300 | 68111 | 0.9314 | 117565 | 4.0 | 41.6 | 54.4 | 86.0 | 100.0 |
| 115 | PCAT-4-A | 0.0077 | 10 | 400 | 62042 | 0.9293 | 119459 | 5.3 | 40.1 | 54.5 | 85.8 | 100.1 |
| 116 | PCAT-4-A | 0.0077 | 10 | 500 | 62609 | 0.9264 | 119254 | 8.8 | 42.1 | 49.2 | 85.6 | 100.0 |
| 117 | PCAT-4-A | 0.0077 | 10 | 600 | 62159 | 0.9236 | 112213 | 5.7 | 42.5 | 51.9 | 85.9 | 100.0 |
| 118 | PCAT-4-A | 0.0077 | 10 | 700 | 56243 | 0.9212 | 122232 | 25.2 | 38.6 | 36.2 | 86.0 | 99.9 |
| 119 | PCAT-4-A | 0.0077 | 10 | 800 | 53520 | 0.9160 | 109403 | 37.0 | 35.2 | 27.8 | 83.5 | 99.8 |
| | | | | | | | | | | | | |
| 120* | PCAT-4-B | 0.0122 | 10 | 0 | 29895 | 0.9505 | 115939 | 1.0 | 2.8 | 96.2 | | 101.6 |
| 121* | PCAT-4-B | 0.0122 | 10 | 100 | 24854 | 0.9376 | 96547.1 | 1.9 | 34.7 | 63.5 | 86.0 | 99.8 |
| 122* | PCAT-4-B | 0.0122 | 10 | 200 | 14138 | 0.9253 | 90924.6 | 3.8 | 49.4 | 46.8 | 84.6 | 99.5 |
| 123* | PCAT-4-B | 0.0122 | 10 | 300 | 7306 | 0.9198 | 87250.8 | 6.3 | 55.1 | 38.6 | 84.0 | 99.4 |
| 124* | PCAT-4-B | 0.0122 | 10 | 400 | 6335 | 0.9164 | 87189.3 | 8.9 | 56.2 | 34.9 | 83.5 | 99.5 |
| 125* | PCAT-4-B | 0.0122 | 10 | 500 | 478 | 0.9130 | 81985 | 23.5 | 50.3 | 26.2 | 62.4 | 99.3 |
| 126* | PCAT-4-B | 0.0122 | 10 | 600 | 663 | 0.9094 | 85874.1 | 24.9 | 47.6 | 27.5 | 82.4 | 99.4 |
| 127* | PCAT-4-B | 0.0122 | 10 | 700 | 590 | 0.9085 | 86301.2 | 33.0 | 41.6 | 25.5 | 82.7 | 99.4 |
| 128* | PCAT-4-B | 0.0122 | 10 | 800 | 477 | 0.9060 | 81233.9 | 28.3 | 43.4 | 28.3 | 82.7 | 99.5 |
| | | | | | | | | | | | | |
| 129* | PCAT-4-C | 0.0077 | 10 | 0 | 238280 | 0.9482 | 127299 | 0.7 | 2.4 | 96.9 | | 100.9 |
| 130* | PCAT-4-C | 0.0077 | 10 | 100 | 233393 | 0.9333 | 115093 | 1.0 | 31.7 | 67.3 | 86.0 | 99.1 |
| 131* | PCAT-4-C | 0.0077 | 10 | 200 | 227974 | 0.9280 | 111414 | 3.4 | 47.5 | 49.1 | 85.7 | 99.1 |
| 132* | PCAT-4-C | 0.0077 | 10 | 300 | 227910 | 0.9210 | 108143 | 12.1 | 51.2 | 36.7 | 83.3 | 98.9 |
| 133* | PCAT-4-C | 0.0077 | 10 | 400 | 219936 | 0.9163 | 102612 | 14.2 | 56.3 | 29.5 | 82.9 | 98.9 |
| 134* | PCAT-4-C | 0.0077 | 10 | 500 | 199315 | 0.9140 | 101936 | 19.6 | 53.8 | 26.6 | 83.0 | 98.9 |
| 135* | PCAT-4-C | 0.0077 | 10 | 600 | 208130 | 0.9095 | 95163.9 | 38.2 | 43.0 | 18.8 | 63.5 | 98.7 |
| 136* | PCAT-4-C | 0.0077 | 10 | 800 | 225345 | 0.9026 | 80314.8 | 50.2 | 34.4 | 15.4 | 58.9 | 98.8 |

As seen in Table 6, octene sweeps of 0 to 800 g of 1-octene are performed for procatalyst compositions PCAT-4-A, PCAT-4-B, and PCAT-4-C, as well as for the starting procatalyst PCAT-4 without treatment of electron donor modifiers.

## Table 7

| Example | Procatalyst | Ti Loading (mmol) | TEA/Ti (mol/mol) | 1-Octene (g) | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|---|
| 137* | PCAT-2* | 0.0026 | 10 | 250 | 508188 | 0.9202 | 102062 | 6.10 | 67.65 | 26.24 | 83.57 | 98.98 |
| 138 | PCAT-2-A | 0.0030 | 10 | 250 | 139296 | 0.9305 | 140951 | 2.54 | 33.93 | 63.53 | 86.80 | 100.15 |
| 139 | PCAT-2-D | 0.0028 | 10 | 250 | 484661 | | 130305 | 2.39 | 53.30 | 44.31 | 85.72 | 99.41 |
| 140* | PCAT-2-E | 0.0017 | 10 | 250 | 597811 | 0.9221 | 120621 | 5.38 | 58.49 | 36.13 | 84.82 | 99.05 |
| 141* | PCAT-2-F | 0.0018 | 10 | 250 | 394693 | 0.9216 | 124617 | 2.75 | 56.77 | 40.47 | 84.97 | 98.86 |
| 142 | PCAT-2-G | 0.0018 | 10 | 250 | 382471 | 0.9236 | 125419 | 3.64 | 52.70 | 43.66 | 85.25 | 99.26 |
| 143* | PCAT-2-H | 0.0022 | 10 | 250 | 512591 | | 106091 | 5.10 | 67.15 | 27.75 | 83.10 | 98.77 |
| 144 | PCAT-2-I | 0.0032 | 10 | 250 | 174644 | 0.9261 | 133325 | 2.62 | 34.73 | 62.65 | 86.02 | 100.00 |

As seen in Table 7, standard runs (250 g 1-octene) are performed for procatalyst compositions PCAT-2-D, PCAT-2-E, PCAT-2-F, PCAT-2-G, PCAT-2-H, PCAT-2-I. Further standard runs are also performed for procatalyst composition PCAT-2-A and the starting procatalyst PCAT-2 without treatment of electron donor modifiers.

## Table 8A

| Example | Procatalyst | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|
| 145* | PCAT-1 | 465450 | 0.9195 | 100849 | 1.57 | 63.38 | 35.01 | 83.64 | 98.62 |

## Table 8B

| Example | Procatalyst | Donor/Ti (mol/mol) | Electron Donor | Efficiency (g ethylene /g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|
| 146 | PCAT-1 | 1 | J | 103249 | | 140550 | 5.27 | 39.29 | 55.45 | 85.2 | 99.37 |
| 147 | PCAT-1 | 0.5 | K | 232730 | 0.9277 | 102785 | 2.82 | 52.07 | 45.05 | 85.1 | 98.94 |
| 148 | PCAT-1 | 1 | K | 213031 | 0.9293 | 119256 | 2.48 | 48.81 | 48.65 | 85.45 | 99.09 |
| 149 | PCAT-1 | 1.5 | K | 178431 | | 120324 | 0.66 | 43.97 | 55.32 | 86.56 | 99.25 |
| 150 | PCAT-1 | 2 | K | 177835 | | 126005 | 1.82 | 42.74 | 55.41 | 86.49 | 99.37 |
| 151 | PCAT-1 | 3 | K | 157762 | | 126392 | 3.86 | 39.48 | 56.63 | 86.57 | 99.37 |

For the examples listed in Tables 8A and 8B, batch reactor polymerization is carried out using 250 g of 1-octene, 0.005 mmol of Ti loading of untreated PCAT-1, TEA/Ti ratio of 8, and electron donor modifier J or K.

With reference to examples 1-136 in Tables 3-6, catalyst activity loss is observed for all electron donor modified procatalysts. However, as seen in working examples 12-20, 51-57, 81-87, and 112-119, electron donor modifier A surprisingly and unexpectedly exhibits high selectivity in suppressing the formation of copolymer and purge fraction (PF) while reducing the comonomer content in the high density fraction (HDF) by exhibiting higher peak temperature (Tp3). As seen in Tables 3-6, under the same polymerization conditions, starting procatalysts treated with electron donor modifier A show significant increase in polymer density (see also FIGS. 1A to 1D) and HDF content (see also FIGS. 2A to 2D) relative to the comparative examples. In addition, the HDF peak temperatures for working examples 12-20, 51-57, 81-87, and 112-119 are considerably higher than those of the comparative examples with the untreated starting procatalysts and the starting procatalysts treated with electron donor modifiers B and C (see also FIGS. 3A to 3D).

Accordingly, electron donor modifier A surprisingly and unexpectedly has a markedly different impact on polymer properties. The activity lost for the starting procatalysts treated with electron donor modifier A is mostly directed to the copolymer component, resulting in a significant decrease in copolymer content and a substantial increase in HDF and HDF peak temperature. Because electron donor modifier A appear to mainly poison copolymerization sites, overall polymer density, as well as molecular weight, significantly increase. This is true across the range of different 1-octene amounts. Indeed, the higher the 1-octene level in the polymerization reaction, the higher the gain in overall polymer density is observed, while the change in overall polymer density is minimal for electron donor modifiers B and C over a wide range of 1-octene levels.

With reference to Table 7, effects of the molecular structures of the electron donor modifiers on the starting procatalyst PCAT-2 are observed. Specifically, as seen in examples 138-140, replacing one of both methoxy groups on the electron donor modifier molecule reduces the modifier's capability to increase the HDF (Wt3), overall polymer density, and HDF peak temperature (Tp3). By comparing working example 138 with comparative example 141 and comparative example 141 with working example 142, it is seen that increasing the bulkiness of the substituents at the 3-position or the 2-position of the diether backbone increases the electron donor modifier's capability of increasing the HDF (Wt3), the overall polymer density, and the HDF peak temperature (Tp3). Indeed, working examples 138 and 144 are directed to electron donor modifiers with bulk substituents on the 3-position of the backbone, and both demonstrate the capability of increasing HDF (Wt3), overall polymer density, and HDF peak temperature (Tp3). In addition, as seen in comparative example 143, although electron donor modifier H has oxygen atoms attached to the 1,3-positions (similar to electron donor modifier A), the ketone structure limits the capabilities of electron donor modifier H compared to electron donor modifier A.

With reference to Tables 8A and 8B, the data demonstrates that electron donor modifiers can be introduced along with the starting procatalyst during polymerization or activation by cocatalyst, instead of first adding the electron donor modifiers to the starting procatalysts. The electron donor modifiers J and K both show the capability of increasing HDF (Wt3), molecular weight, and HDF peak temperature (Tp3). Furthermore, Table 8B demonstrates that the capability of increasing HDF (Wt3), overall polymer density, molecular weight, and HDF peak temperature (Tp3) is enhanced when a greater amount of the electron donor modifier is added to the starting procatalyst.

Accordingly, the present disclosure relates to the surprising and unexpected discovery of novel procatalyst compositions formed through treatment by certain electron donor modifiers that substantially suppress copolymerization reactions and, thus, produce higher density polymers with low level of comonomer incorporation for solution process polymerization.

As seen in the above tables, the sub-structure of C-O-C-C-C-O-C appears to be the most effective in suppressing the formation of copolymer, especially for those with relatively bulky substituents on the C-C-C backbone. In contrast, compounds with C-O-C-C-O-C sub-structure do not possess such capability. It is speculated that the selectivity in deactivating copolymerization sites is determined by the length of the bridge between the 2 chelating atoms. Other molecules with adequate bridge length may also render high selectivity in reducing copolymer formation. A heteroatom-containing bridges, such as Si, Ge, P, and S, may perform similarly as the C-C-C bridge. In addition, structural analogs, such as R2N-, R2P-, and RS-, may be used to replace one of both the ether groups (RO-) in the 1,3-diether molecule and provide similar performance.

*Single Reactor Continuous Polymerization*

In addition to batch reactor polymerization, further examples are carried out with both single reactor and dual reactor continuous polymerization evaluations. For single reactor continuous polymerization, the sample procatalyst compositions PCAT-2-A, PCAT-4A, and PCAT-5-C, as well as the starting procatalysts PCAT-1, PCAT-2, PCAT-4, and PCAT-5, are evaluated.

The single reactor continuous polymerization is performed in the following way. All raw materials (monomer and comonomer) and the process solvent (a narrow boiling range high-purity paraffinic and cycloparaffinic solvent suitable for maintaining a single liquid phase throughout the range of reaction conditions) are purified with molecular sieves before introduction into the reaction environment. High purity hydrogen is supplied by shared pipeline and dried with molecular sieve. The reactor monomer feed stream is pressurized via a mechanical compressor to above reaction pressure. The solvent feed is pressurized via a pump to above reaction pressure. The comonomer feed is pressurized via a pump to above reaction pressure. The monomer, comonomer, solvent, and hydrogen streams are combined and introduced to the reactor. The individual catalyst components (starting procatalysts or sample procatalyst compositions and the co-catalyst) are manually batch diluted with purified solvent and pressured to above reaction pressure. The co-catalyst is triethylaluminum. All reaction feed flows are measured with mass flow meters and independently controlled with metering pumps. The process conditions for each polymerization example are listed in Tables 9A and 9B.

The continuous solution polymerization reactor consists of a liquid full, adiabatic, and continuously stirred tank

reactor (CSTR). Independent control of all solvent, monomer, comonomer, hydrogen, and catalyst component feeds is possible. The total feed stream to the reactor (solvent, monomer, comonomer, and hydrogen) is temperature controlled by passing the feed stream through a heat exchanger. The total feed to the polymerization reactor is injected into the reactor in one location. The catalyst components are injected into the polymerization reactor separate from the other feeds. An agitator in the reactor is responsible for continuously mixing of the reactants. An oil bath provides for some fine tuning of the reactor temperature control.

The final reactor effluent enters a zone where it is deactivated with the addition of and reaction with a suitable reagent (typically water). At this same reactor exit location other additives could also be added. Following catalyst deactivation and any additive addition, the reactor effluent enters a devolatization system where the polymer is removed from the non-polymer stream. The non-polymer stream is removed from the system. The isolated polymer melt is pelletized and collected.

The Co-Catalyst Co-Cat-C is triethylaluminum. The solvent is SBP 100/140 available from Shell.

**Table 9A**

| Run Number | Reactor Configuration | Comonomer Type | Reactor 1 Feed Temperature | Reactor 1 Feed Solvent / Ethylene Mass Flow Ratio | Reactor 1 Feed Comonomer / Ethylene Mass Flow Ratio | Reactor 1 Feed Hydrogen/ Ethylene Mass Flow Ratio | Reactor 1 Temperature |
|---|---|---|---|---|---|---|---|
| | | Type | °C | g/g | g/g | g/g | °C |
| 1 | Single | Octene-1 | 28 | 5.7 | 0.53 | 4.5E-05 | 185 |
| 2 | Single | Octene-1 | 23 | 5.8 | 0.48 | 5.5E-05 | 185 |
| 3 | Single | Octene-1 | 20 | 5.2 | 0.82 | 6.3E-05 | 185 |
| 4 | Single | Octene-1 | 24 | 5.7 | 0.44 | 3.4E-05 | 185 |
| 5 | Single | Octene-1 | 23 | 5.7 | 0.43 | 5.1E-05 | 185 |
| 6 | Single | Octene-1 | 20 | 5.5 | 0.49 | 6.0E-05 | 185 |
| 7 | Single | Octene-1 | 20 | 4.0 | 1.99 | 1.6E-04 | 185 |
| 8 | Single | Octene-1 | 25 | 5.7 | 0.37 | 3.9E-05 | 185 |
| 9 | Single | Octene-1 | 20 | 5.5 | 0.54 | 5.1E-05 | 185 |
| 10 | Single | Octene-1 | 20 | 4.9 | 1.00 | 6.4E-05 | 184 |
| 11 | Single | Octene-1 | 20 | 4.0 | 1.99 | 1.7E-04 | 185 |

**Table 9B**

| Run Number | Reactor 1 Pressure | Reactor 1 Ethylene Conversion | Reactor 1 Catalyst Type | Reactor 1 Electron Donor Modifier | Reactor 1 Co-Catalyst Type | Reactor 1 Co-Catalyst to Catalyst Molar Ratio (A1 to Ti component ratio) | Reactor 1 Residence Time |
|---|---|---|---|---|---|---|---|
| | barg | % | Type | | Type | mol/mol | min |
| 1 | 28 | 92.3 | PCAT-1 | -- | Co-Cat-C | 4.0 | 5.1 |
| 2 | 28 | 91.8 | PCAT-1 | -- | Co-Cat-C | 4.0 | 5.1 |
| 3 | 28 | 87.0 | PCAT-1 | -- | Co-Cat-C | 4.0 | 5.2 |
| 4 | 28 | 92.0 | PCAT-2 | -- | Co-Cat-C | 10.0 | 5.1 |
| 5 | 28 | 92.1 | PCAT-2 | -- | Co-Cat-C | 5.7 | 5.2 |
| 6 | 28 | 92.0 | PCAT-2 | -- | Co-Cat-C | 6.0 | 5.2 |
| 7 | 28 | 87.0 | PCAT-2-A | A | Co-Cat-C | 16.0 | 5.2 |
| 8 | 28 | 92.0 | PCAT-5 | -- | Co-Cat-C | 13.0 | 5.2 |
| 9 | 28 | 92.0 | PCAT-5-C | C | Co-Cat-C | 18.0 | 5.2 |
| 10 | 28 | 87.0 | PCAT-4 | -- | Co-Cat-C | 8.0 | 5.2 |
| 11 | 28 | 87.1 | PCAT-4-A | A | Co-Cat-C | 16.0 | 5.2 |

**Table 10**

| | Tp1 (°C) | Tp2 (°C) | Tp3 (°C) | Wt1 (%) | Wt2 (%) | Wt3 (%) |
|---|---|---|---|---|---|---|
| Run 1 | 28.49 | 81.85 | 99.04 | 4.29 | 67.8 | 27.87 |
| Run 2 | 28.44 | 83.86 | 98.36 | 2.55 | 71.75 | 25.64 |
| Run 3 | 28.49 | 83.36 | 98.76 | 3.56 | 63.89 | 32.49 |
| Run 4 | 28.49 | 83.26 | 98.77 | 3.17 | 69.22 | 27.55 |
| Run 5 | 28.44 | 83.38 | 99.33 | 2.71 | 70.69 | 26.55 |
| Run 6 | 28.59 | 84.87 | 99.16 | 1.81 | 68.38 | 29.75 |
| Run 7 | 28.39 | 85.56 | 99.55 | 9.84 | 38.29 | 51.83 |
| Run 8 | 28.54 | 84.56 | 98.85 | 1.76 | 72.46 | 25.71 |
| Run 9 | 28.49 | 84.19 | 98.69 | 2.35 | 72.39 | 25.20 |
| Run 10 | 28.39 | 82.22 | 98.97 | 5.18 | 65.54 | 29.23 |
| Run 11 | 28.44 | 84.56 | 99.78 | 8.74 | 36.67 | 54.55 |

**Table 11**

| Single Reactor Continuous Polymerization | | | | | | | | | | | | |
|---|---|---|---|---|---|---|---|---|---|---|---|---|
| | Mn (g/mol) | Mw (g/mol) | Mz (g/mol) | Mw/Mn | 12 (g/10 min) | 110/12 | Density (g/cc) | Tm1 (°C) | Tm2 (°C) | Heat of fusion (J/g) | % Cryst. | Tc1 (°C) |
| Run 1 | 30,746 | 125,240 | 397,168 | 4.07 | 0.89 | 7.61 | 0.9199 | 123.8 | 121.6 | 141.3 | 48.4 | 107.9 |
| Run 2 | 37,049 | 126,729 | 379,091 | 3.42 | 0.90 | 7.57 | 0.9197 | 122.6 | 119.6 | 144.7 | 49.6 | 106.4 |
| Run 3 | 31,347 | 119,859 | 370,999 | 3.82 | 0.95 | 7.96 | 0.9218 | 123.6 | NA | 149.1 | 51.1 | 107.1 |
| Run 4 | 36,979 | 125,743 | 387,639 | 3.40 | 0.94 | 7.05 | 0.9200 | 123.0 | 120.1 | 140.7 | 48.2 | 106.7 |
| Run 5 | 41,819 | 119,381 | 298,328 | 2.85 | 0.88 | 6.86 | 0.9197 | 123.8 | 120.4 | 146.1 | 50.0 | 106.9 |
| Run 6 | 39,582 | 115,017 | 290,269 | 2.91 | 0.98 | 6.73 | 0.9220 | 124.0 | 121.1 | 150.6 | 51.6 | 108.1 |
| Run 7 | 25,576 | 104,092 | 243,804 | 4.07 | 0.90 | 8.53 | 0.9277 | 126.0 | NA | 159.6 | 54.7 | 112.2 |
| Run 8 | 43,904 | 115,206 | 273,016 | 2.62 | 1.00 | 6.60 | 0.9206 | 123.5 | 120.7 | 144.2 | 49.4 | 107.0 |
| Run 9 | 39,681 | 111,487 | 265,897 | 2.81 | 1.02 | 6.88 | 0.9199 | 123.1 | 119.9 | 145.6 | 49.9 | 105.9 |
| Run 10 | 32,559 | 113,140 | 293,468 | 3.47 | 1.02 | 7.13 | 0.9186 | 123.6 | NA | 144.2 | 49.4 | 106.2 |
| Run 11 | 24,496 | 111,381 | 309,489 | 4.55 | 0.93 | 8.29 | 0.9293 | 126.5 | NA | 160.8 | 55.1 | 113.0 |
| NA=Not Applicable | | | | | | | | | | | | |

**Table 12**

| | Melt Strength (cN) | Viscosity at 0.1 rad/s (Pa-s, 190 °C) | Viscosity at 1 rad/s (Pa-s, 190 °C) | Viscosity at 10 rad/s (Pa-s, 190 °C) | Viscosity at 100 rad/s (Pa-s, 190 °C) | Viscosity Ratio (Viscosity 0.1 rad/s / Viscosity 100 rad/s) (190 °C) | Tan Delta 0.1 rad/s (190 °C) |
|---|---|---|---|---|---|---|---|
| Run 1 | 3.6 | 9,039 | 7,394 | 4,543 | 1,802 | 5.02 | 10.55 |
| Run 2 | 3.4 | 8,741 | 7,237 | 4,569 | 1,863 | 4.69 | 11.56 |
| Run 3 | 3.6 | 8,518 | 6,956 | 4,313 | 1,750 | 4.87 | 10.70 |
| Run 4 | 3.0 | 8,279 | 7,095 | 4,654 | 1,940 | 4.27 | 14.66 |
| Run 5 | 3.2 | 8,509 | 7,275 | 4,821 | 2,036 | 4.18 | 13.75 |
| Run 6 | 3.0 | 7,905 | 6,782 | 4,573 | 1,985 | 3.98 | 13.81 |
| Run 7 | 4.3 | 11,635 | 7,469 | 4,040 | 1,577 | 7.38 | 4.09 |
| Run 8 | 3.0 | 7,560 | 6,596 | 4,557 | 2,017 | 3.75 | 15.95 |
| Run 9 | 3.0 | 7,599 | 6,522 | 4,405 | 1,916 | 3.97 | 13.83 |
| Run 10 | 3.0 | 7,755 | 6,574 | 4,263 | 1,773 | 4.37 | 13.37 |
| Run 11 | 4.1 | 10,926 | 7,299 | 4,087 | 1,625 | 6.72 | 4.59 |

As seen in Tables 10, 11 and 12, the starting procatalysts treated with electron donor modifier A show a significant increase in polymer density, HDF content, HDF peak temperature, molecular weight distribution, melting temperature, heat of fusion, percent crystallinity, crystallization temperature, melt strength, viscosity at 0.1 rad/s, and viscosity ratio and a lowering of viscosity at 100 rad/s and tan delta at 0.1 rad/s even at a much higher comonomer/ethylene mass flow ratio as compared to the starting procatalysts without electron donor modifier treatment and the starting procatalysts treated with electron donor modifier C. Accordingly, as with the batch reactor polymerization results, the single reactor continuous polymerization evaluation indicates that certain electron donor modifiers surprisingly and unexpectedly exhibit high selectivity in suppressing the formation of copolymer and show significant increase in polymer density and HDF content.

Furthermore, as seen in FIGS. 4A-C, the starting procatalysts treated with electron donor modifier A show better viscosity properties compared to the starting procatalysts without electron donor modifier treatment and the starting procatalsyts treated with electron donor modifier C. These improved viscosity properties include an increase in shear sensitivity, or a higher decrease in viscosity with increasing frequency, as seen in FIGS. 4A-C and as seen by a higher viscosity ratio in Table 12.

Accordingly, as with the batch reactor polymerization evaluation, the single reactor continuous polymerization results show the surprising and unexpected discovery of novel procatalyst compositions formed through treatment by certain electron donor modifiers that substantially suppress copolymerization reactions and, thus, produce higher density polymers with low level of comonomer incorporation for solution process polymerization.

*Dual Reactor Continuous Polymerization*

Further comparative and working examples are performed in a dual reactor continuous reactor setting. Specifically, the following comparative and working examples are prepared in the following way. All raw materials (monomer

and comonomer) and the process solvent (a narrow boiling range high-purity paraffinic and cycloparaffinic solvent suitable for maintaining a single liquid phase throughout the range of reaction conditions) are purified with molecular sieves before introduction into the reaction environment. High purity hydrogen is supplied by shared pipeline and dried with molecular sieve. The reactor monomer feed streams are pressurized via a mechanical compressor to above reaction pressure. The solvent feed streams are pressurized via a pump to above reaction pressure. The comonomer feed is pressurized via a pump to above reaction pressure. The individual catalyst components are manually batch diluted to specified component concentrations with purified solvent and pressured to above reaction pressure. All reaction feed flows are measured with mass flow meters and independently controlled with metering pumps.

The continuous solution polymerization reactors consist of two liquid full, adiabatic, and continuously stirred tank reactors (CSTR) aligned in a series configuration. Independent control of all fresh solvent, monomer, comonomer, hydrogen, and catalyst component feeds is possible. The total fresh feed stream to the reactors (solvent, monomer, comonomer, and hydrogen) are temperature controlled by passing the feed streams through heat exchangers. The total fresh feeds to the polymerization reactors are injected into the reactors in one location for each reactor. The catalyst components are injected into the polymerization reactors separate from the other feeds. Process conditions for each reactor are according to Table 13. An agitator in each reactor is responsible for continuously mixing the reactants. An oil bath provides for fine tuning of the reactor temperature control. In the dual series reactor configuration, the effluent from the first polymerization reactor exits the first reactor and is added to the second reactor separate from the fresh feeds to the second reactor.

The second reactor effluent enters a zone where it is deactivated with the addition of and reaction with a suitable reagent (typically water). At this same reactor exit location other additives may also be added. Following catalyst deactivation and any additive addition, the reactor effluent enters a devolatization system where the polymer is removed from the non-polymer stream. The non-polymer stream is removed from the system. The isolated polymer melt is pelletized and collected.

The catalyst Cat-A is bis((2-oxoyl-3-(3,5-bis-(1,1-dimethylethyl)phenyl)-5-(methyl)phenyl)-(5-2-methyl)propane-2-yl)2-phenoxy)-1,3-propanediyl zirconium (IV)dimethyl, as disclosed in WO 2007/136494, which is incorporated herein by reference in its entirety.

The Co-Catalyst Co-Cat-A is a mixture of methyldi($C_{14-18}$ alkyl)ammonium salts of tetrakis(pentafluorophenyl)borate, prepared by reaction of a long chain trialkylamine (Armeen™ M2HT, available from Akzo-Nobel, Inc.), HCl and $Li[B(C_6F_5)_4]$, substantially as disclosed in U.S. Patent No. 5,919,9883, Ex. 2., which are purchased from Boulder Scientific and used without further purification.

The Co-Catalyst Co-Cat-B was of MMAO-3A purchased from Akzo Nobel and used without further purification.

The Co-Catalyst Co-Cat-C is triethylaluminum. The Solvent is SBP 100/140.

The reaction conditions are provided in Table 13 and the measured properties of the resulting polymers are provided in Tables 14, 15, and 16.

**Table 13**

| Run Number | | Run 12 | Run 13 | Run 14 |
|---|---|---|---|---|
| Reactor Configuration | | Dual Series | Dual Series | Dual Series |
| Comonomer Type | Type | Octene-1 | Octene-1 | Octene-1 |
| Reactor 1 Feed Temperature | °C | 7 | 7 | 7 |
| Reactor 1 Fresh Feed Solvent/Ethylene Mass Flow Ratio | kg/kg | 9.9 | 9.7 | 9.7 |
| Reactor 1 Fresh Feed Comonomer/Ethylene Mass Flow Ratio | kg/kg | 0.35 | 0.48 | 0.46 |
| Reactor 1 Fresh Feed Hydrogen/Ethylene Mass Flow Ratio | kg/kg | 1.9E-04 | 1.5E-04 | 1.6E-04 |
| Reactor 1 Temperature | °C | 125 | 125 | 125 |
| Reactor 1 Pressure | barg | 28 | 28 | 28 |
| Reactor 1 Residence Time | min | 7.4 | 8.1 | 8.1 |
| Reactor 1 Ethylene Conversion | % | 89.1 | 89.7 | 89.4 |
| Reactor 1 Catalyst Type | Type | Cat-A | Cat-A | Cat-A |
| Reactor 1 Co-Catalyst 1 Type | Type | Co-Cat-A | Co-Cat-A | Co-Cat-A |

(continued)

| Run Number | | Run 12 | Run 13 | Run 14 |
|---|---|---|---|---|
| Reactor Configuration | | Dual Series | Dual Series | Dual Series |
| Comonomer Type | Type | Octene-1 | Octene-1 | Octene-1 |
| Reactor 1 Co-Catalyst 1 to Catalyst Molar Ratio (B to Metal component ratio) | mol/mol | 1.2 | 1.2 | 1.2 |
| Reactor 1 Co-Catalyst 2 Type | Type | Co-Cat-B | Co-Cat-B | Co-Cat-B |
| Reactor 1 Co-Catalyst 2 to Catalyst Molar Ratio (A1 to Metal component ratio) | mol/mol | 22 | 23 | 60 |
| Reactor 2 Feed Temperature | °C | 20 | 20 | 20 |
| Reactor 2 Fresh Feed Solvent / Ethylene Mass Flow Ratio | kg/kg | 3.5 | 3.5 | 3.5 |
| Reactor 2 Fresh Feed Comonomer / Ethylene Mass Flow Ratio | kg/kg | 0 | 0 | 0 |
| Reactor 2 Fresh Feed Hydrogen / Ethylene Mass Flow Ratio | kg/kg | 8.3E-05 | 2.6E-04 | 2.0E-04 |
| Reactor 2 Temperature | °C | 185 | 185 | 185 |
| Reactor 2 Pressure | barg | 28 | 28 | 28 |
| Reactor 2 Residence Time | min | 4.4 | 4.7 | 4.7 |
| Reactor 2 Ethylene Conversion | % | 87 | 86 | 86.2 |
| Reactor 2 Catalyst Type | Type | PCAT-5 | PCAT-4A | PCAT-2A |
| Reactor 2 Co-Catalyst 1 Type | Type | Co-Cat-C | Co-Cat-C | Co-Cat-C |
| Reactor 2 Co-Catalyst 1 to Catalyst Molar Ratio (Al to Ti component ratio) | mol/mol | 10 | 16 | 16 |

**Table 14**

| | Mn (g/mol) | Mw (g/mol) | Mz (g/mol) | Mw/Mn | 12 (g/10 min) | I10/I2 | Density (g/cc) | Tm1 (°C) | Heat of Fusion (J/g) | % Cryst. | Tc1 (°C) |
|---|---|---|---|---|---|---|---|---|---|---|---|
| Run 12 | 41,576 | 108,779 | 212,412 | 2.62 | 0.88 | 8.62 | 0.9294 | 125.5 | 158.1 | 54.1 | 111.5 |
| Run 13 | 35,357 | 110,389 | 226,254 | 3.12 | 0.86 | 7.38 | 0.9312 | 127.2 | 167.7 | 57.4 | 112.1 |
| Run 14 | 34,031 | 110,154 | 232,610 | 3.24 | 0.93 | 7.24 | 0.9329 | 127.6 | 172.0 | 58.9 | 111.6 |

**Table 15**

| | Tp1 (°C) | Tp2 (°C) | Tp3 (°C) | Wt1 (%) | Wt2 (%) | Wt3 (%) |
|---|---|---|---|---|---|---|
| Run 12 | 29.61 | 81.48 | 98.57 | 0.30 | 42.57 | 57.1 |
| Run 13 | 29.76 | 75.62 | 100.17 | 0.39 | 42.54 | 57.05 |
| Run 14 | 29.71 | 76.43 | 100.21 | 0.40 | 42.59 | 56.99 |

**Table 16**

| | Melt Strength (cN) | Viscosity at 0.1 rad/s (Pa-s, 190 °C) | Viscosity at 1 rad/s (Pa-s, 190 °C) | Viscosity at 10 rad/s (Pa-s, 190 °C) | Viscosity at 100 rad/s (Pa-s, 190 °C) | Viscosity Ratio (Viscosity 0.1 rad/s / Viscosity 100 rad/s) (190 °C) | Tan Delta 0.1 rad/s (190 °C) |
|---|---|---|---|---|---|---|---|
| Run 12 | 4.0 | 9,492 | 7,241 | 4,680 | 2,050 | 4.63 | 6.86 |
| Run 13 | 3.8 | 10,367 | 7,635 | 4,797 | 2,001 | 5.18 | 6.39 |
| Run 14 | 3.6 | 9,383 | 7,052 | 4,503 | 1,914 | 4.90 | 7.11 |

As seen in Tables 14, 15, and 16 the starting procatalysts treated with electron donor modifier A show an increase in separation of copolymer peak (Tp2) and HDF peak (Tp3), molecular weight distribution, melting temperature, heat of fusion, percent crystallinity, and viscosity ratio, as well as a lowering of viscosity at 100 rad/s as compared to the starting procatalysts without electron donor modifier treatment. Accordingly, the dual reactor continuous polymerization evaluation indicates that electron donor modifier A surprisingly and unexpectedly exhibits high selectivity in suppressing the formation of copolymer and shows significant increase in polymer density and HDF content. In this regard, the dual reactor continuous polymerization results show the surprising and unexpected discovery of novel procatalyst compositions with low comonomer incorporation capability that can be used in solution process PE production that requires a linked reactor to produce a portion of polymer with high level of comonomer and another reactor to produce a portion of polymer with low level of comonomer. A further reduction in comonomer incorporation would enhance the ability to increase the differences between those two portions of polymer in order to achieve property improvements for the overall polymer.

Accordingly, these new catalysts provide the additional capacity to expand the design window of PE production, including PE production requiring one of the linked reactors to produce a portion of polymer with high level of comonomer and another reactor to produce a portion of polymer with low level of comonomer.

The following embodiments, including combinations thereof, are within the scope of the present disclosure:

1. A process for preparing a procatalyst composition comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (I):

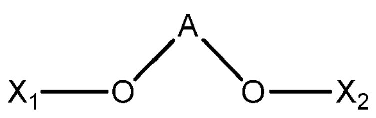 (I),

wherein:

A is $-CR^1R^2CR^3R^4CR^5R^6-$ or $-SiR^7R^8-$;

each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom, wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

2. The process of embodiment 1, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

3. The process of embodiment 1, wherein the $X_1$-O group, the $X_2$-O group, or both groups are replaced with a functional group comprising at least one heteroatom selected from N, O, P, and S.

4. The process of embodiment 1, wherein step (c) includes addition of the electron donor modifier to the supported titanium procatalyst at a donor/titanium ratio of 0.01 to 100.

5. The process of embodiment 4, wherein step (c) includes addition of the electron donor modifier to the supported titanium procatalyst at a donor/titanium ratio of 0.1 to 10 and aging for at least 1 minute.

6. The process of embodiment 1, wherein a metallic halide is used in steps (a), (b), and/or (c).

7. The process of embodiment 6, wherein the metallic halide is an aluminum halide.

8. The process of embodiment 1, wherein the hydrocarbon solvent of step (a) is also present in steps (b) and (c).

9. A procatalyst composition comprising a titanium moiety, a magnesium chloride support, a hydrocarbon solution in which the magnesium chloride support is formed, and an electron donor modifier having the formula (I):

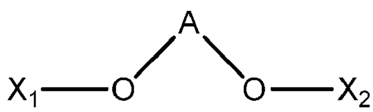 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,

wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

10. The procatalyst composition of embodiment 9, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

11. The procatalyst composition of embodiment 9, wherein the $X_1$-O group, the $X_2$-O group, or both groups are replaced with a functional group comprising at least one heteroatom selected from N, O, P, and S.

12. A solution process for polymerization of ethylene and at least one additional polymerizable monomer to form a polymer composition, the process comprising:

contacting ethylene and the additional polymerizable monomer with a catalyst composition under polymerization

conditions;
wherein the catalyst composition comprises a procatalyst composition and an alkyl-aluminum cocatalyst;
wherein the additional polymerizable monomer is a $C_{3-20}$ $\alpha$-olefin; and
wherein the procatalyst composition is prepared according to a process comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (I):

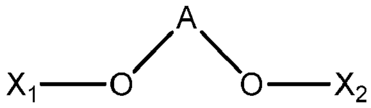 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,
wherein a total number of non-hydrogen atoms in $R^1$ to $R^6$ or $R^7$ to $R^8$ is greater than 2,
wherein $R^1$ to $R^6$ or $R^7$ to $R^8$ optionally forms a cyclic structure, and
wherein $X_1$ and $X_2$ are not both hydrogen.

13. The process of embodiment 12, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

14. The process of embodiment 12, wherein the $X_1$-O group, the $X_2$-O group, or both groups are replaced with a functional group comprising at least one heteroatom.

15. A polymer composition prepared according to the process of embodiment 12, wherein the polymer composition comprises a polymer density that is at least 0.003 g/cc higher than a polymer composition prepared by a process according to embodiment 12 without step (c).

16. A polymer composition prepared according to the process of embodiment 12, wherein the polymer composition comprises a high density fraction content in crystallization elution fractionation of at least 10 weight percent higher than a polymer composition prepared by a process according to embodiment 12 without step (c).

17. A polymer composition prepared according to the process of embodiment 12, wherein the polymer composition comprises a high density fraction peak temperature in crystallization elution fractionation of at least 0.5 °C higher than a polymer composition prepared by a process according to embodiment 12 without step (c).

18. A polymer composition prepared according to the process of embodiment 12, further comprising a high density fraction content in crystallization elution fractionation with a peak temperature of 98.5 °C or higher.

19. A polymer composition prepared according to the process of embodiment 12, comprising 0.1 to 300 ppm of least one compound with formula (I).

20. The process of embodiment 12, wherein the process is conducted in a single or dual reactor process.

21. A solution process for polymerization of ethylene and at least one additional polymerizable monomer to form a polymer composition, the process comprising:

contacting ethylene and the additional polymerizable monomer with a catalyst composition and an electron

donor modifier under polymerization conditions;
wherein the catalyst composition comprises a starting procatalyst composition and an alkyl-aluminum cocatalyst;
wherein the additional polymerizable monomer is a $C_{3-20}$ $\alpha$-olefin; and
wherein the electron donor modifier having the formula (I):

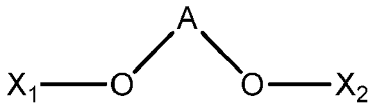 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,
wherein a total number of non-hydrogen atoms in $R^1$ to $R^6$ or $R^7$ to $R^8$ is greater than 2,
wherein $R^1$ to $R^6$ or $R^7$ to $R^8$ optionally forms a cyclic structure, and
wherein $X_1$ and $X_2$ are not both hydrogen.

The present invention can be described as set out in the following numbered clauses:

1. A process for preparing a procatalyst composition comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (I):

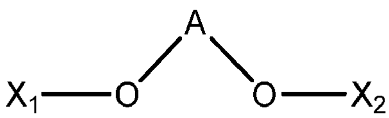 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,
wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

2. The process of clause 1, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

3. The process of clause 1, wherein the $X_1$-O group, the $X_2$-O group, or both groups are replaced with a functional group comprising at least one heteroatom selected from N, O, P, and S.

4. The process of clause 1, wherein step (c) includes addition of the electron donor modifier to the supported titanium procatalyst at a donor/titanium ratio of 0.01 to 100.

5. The process of clause 4, wherein step (c) includes addition of the electron donor modifier to the supported titanium procatalyst at a donor/titanium ratio of 0.1 to 10 and aging for at least 1 minute.

6. The process of clause 1, wherein a metallic halide is used in steps (a), (b), and/or (c).

7. The process of clause 6, wherein the metallic halide is an aluminum halide.

8. The process of clause 1, wherein the hydrocarbon solvent of step (a) is also present in steps (b) and (c).

9. A procatalyst composition comprising a titanium moiety, a magnesium chloride support, a hydrocarbon solution in which the magnesium chloride support is formed, and an electron donor modifier having the formula (I):

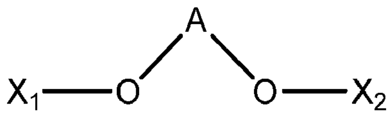 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,

wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

10. The procatalyst composition of clause 9, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

11. The procatalyst composition of clause 9, wherein the $X_1$-O group, the $X_2$-O group, or both groups are replaced with a functional group comprising at least one heteroatom selected from N, O, P, and S.

12. A solution process for polymerization of ethylene and at least one additional polymerizable monomer to form a polymer composition, the process comprising:

contacting ethylene and the additional polymerizable monomer with a catalyst composition under polymerization conditions;
wherein the catalyst composition comprises a procatalyst composition and an alkyl-aluminum cocatalyst;
wherein the additional polymerizable monomer is a $C_{3-20}$ $\alpha$-olefin; and
wherein the procatalyst composition is prepared according to a process comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (I):

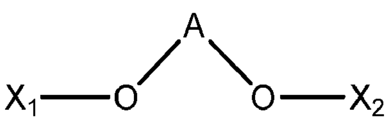 (I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,
wherein a total number of non-hydrogen atoms in $R^1$ to $R^6$ or $R^7$ to $R^8$ is greater than 2,
wherein $R^1$ to $R^6$ or $R^7$ to $R^8$ optionally forms a cyclic structure, and
wherein $X_1$ and $X_2$ are not both hydrogen.

13. The process of clause 12, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

14. The process of clause 12, wherein the $X_1$-O group, the $X_2$-O group, or both groups are replaced with a functional group comprising at least one heteroatom.

15. A polymer composition prepared according to the process of clause 12, wherein the polymer composition comprises a polymer density that is at least 0.003 g/cc higher than a polymer composition prepared by a process according to clause 12 without step (c).

16. A polymer composition prepared according to the process of clause 12, wherein the polymer composition comprises a high density fraction content in crystallization elution fractionation of at least 10 weight percent higher than a polymer composition prepared by a process according to clause 12 without step (c).

17. A polymer composition prepared according to the process of clause 12, wherein the polymer composition comprises a high density fraction peak temperature in crystallization elution fractionation of at least 0.5 °C higher than a polymer composition prepared by a process according to clause 12 without step (c).

18. A polymer composition prepared according to the process of clause 12, further comprising a high density fraction content in crystallization elution fractionation with a peak temperature of 98.5 °C or higher.

19. A polymer composition prepared according to the process of clause 12, comprising 0.1 to 300 ppm of least one compound with formula (I).

20. A solution process for polymerization of ethylene and at least one additional polymerizable monomer to form a polymer composition, the process comprising:

contacting ethylene and the additional polymerizable monomer with a catalyst composition and an electron donor modifier under polymerization conditions;
wherein the catalyst composition comprises a starting procatalyst composition and an alkyl-aluminum cocatalyst;
wherein the additional polymerizable monomer is a $C_{3-20}$ $\alpha$-olefin; and
wherein the electron donor modifier having the formula (I):

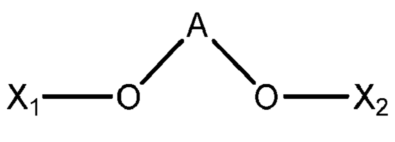
(I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,

wherein a total number of non-hydrogen atoms in $R^1$ to $R^6$ or $R^7$ to $R^8$ is greater than 2,
wherein $R^1$ to $R^6$ or $R^7$ to $R^8$ optionally forms a cyclic structure, and
wherein $X_1$ and $X_2$ are not both hydrogen.

## Claims

1. A procatalyst composition comprising a titanium moiety, a magnesium chloride support, a hydrocarbon solution in which the magnesium chloride support is formed, and an electron donor modifier having the formula (I):

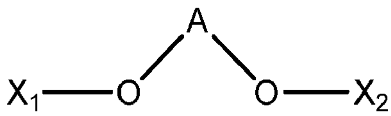

(I),

wherein:

A is $-CR^1R^2CR^3R^4CR^5R^6-$ or $-SiR^7R^8-$;
each of $X_1$ and $X_2$ is hydrogen, R, or C(=O)R;
R is a $C_1$-$C_{20}$ hydrocarbyl that is optionally substituted with one or more halogens or at least one functional group comprising at least one heteroatom; and
each of $R^1$ to $R^8$ is hydrogen or a $C_1$-$C_{20}$ hydrocarbyl that is optionally comprised of at least one heteroatom,

wherein a total number of non-hydrogen atoms in $R^1$ to $R^6$ or $R^7$ to $R^8$ is greater than 2, wherein $R^1$ to $R^6$ or $R^7$ to $R^8$ optionally forms a cyclic structure,
and
wherein $X_1$ and $X_2$ are not both hydrogen.

2. The procatalyst composition of claim 1, wherein $X_1$ and $X_2$ are alkyl groups, wherein each of $R^1$, $R^2$, $R^5$, and $R^6$ is hydrogen, and wherein each of $R^3$, $R^4$, $R^7$, and $R^8$ is a branched or cyclic hydrocarbyl.

3. The procatalyst composition of claim 1, wherein the $X_1$-O group, the $X_2$-O group, or both groups are replaced with a functional group comprising at least one heteroatom selected from N, O, P, and S.

FIG. 1A

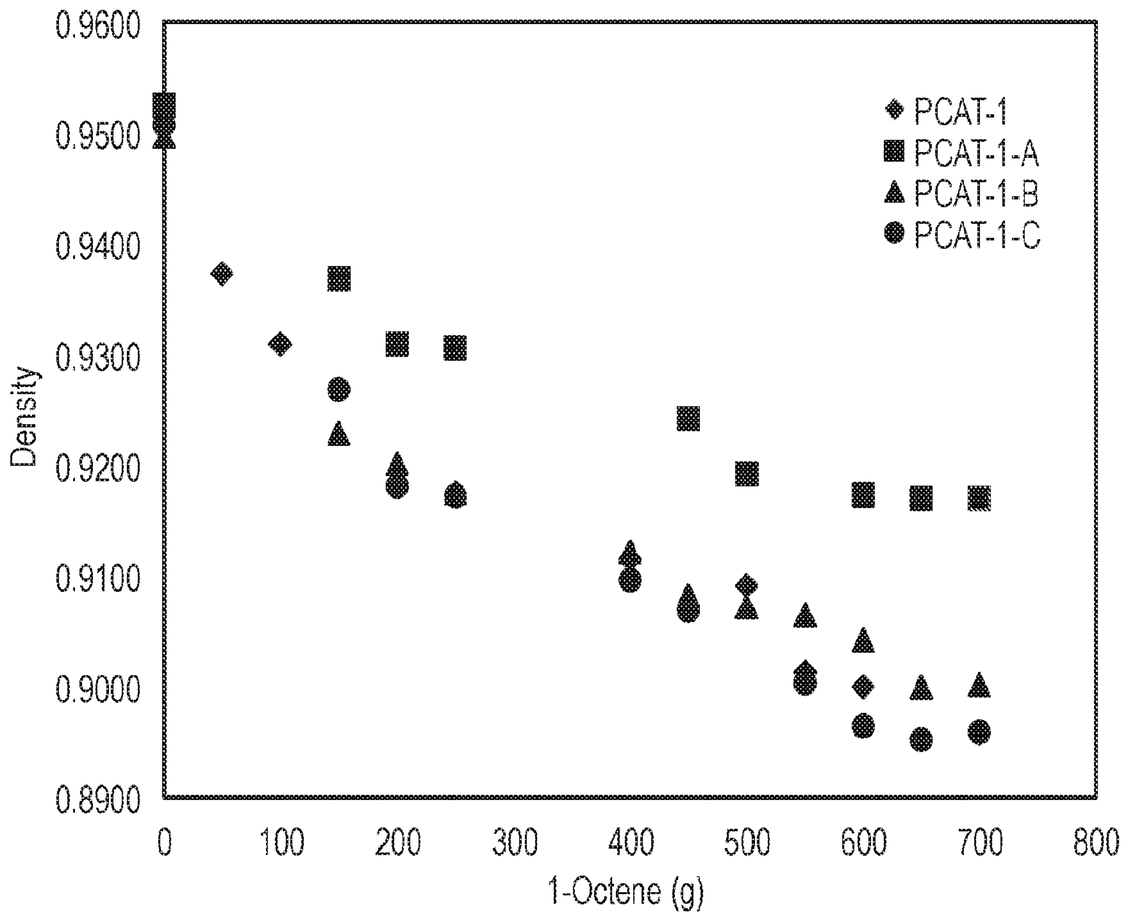
0.9600
0.9500
0.9400
0.9300
0.9200
0.9100
0.9000
0.8900
Density
0
100
200
300
400
500
600
700
800
1-Octene (g)
PCAT-1
PCAT-1-A
PCAT-1-B
PCAT-1-C

# FIG. 1B

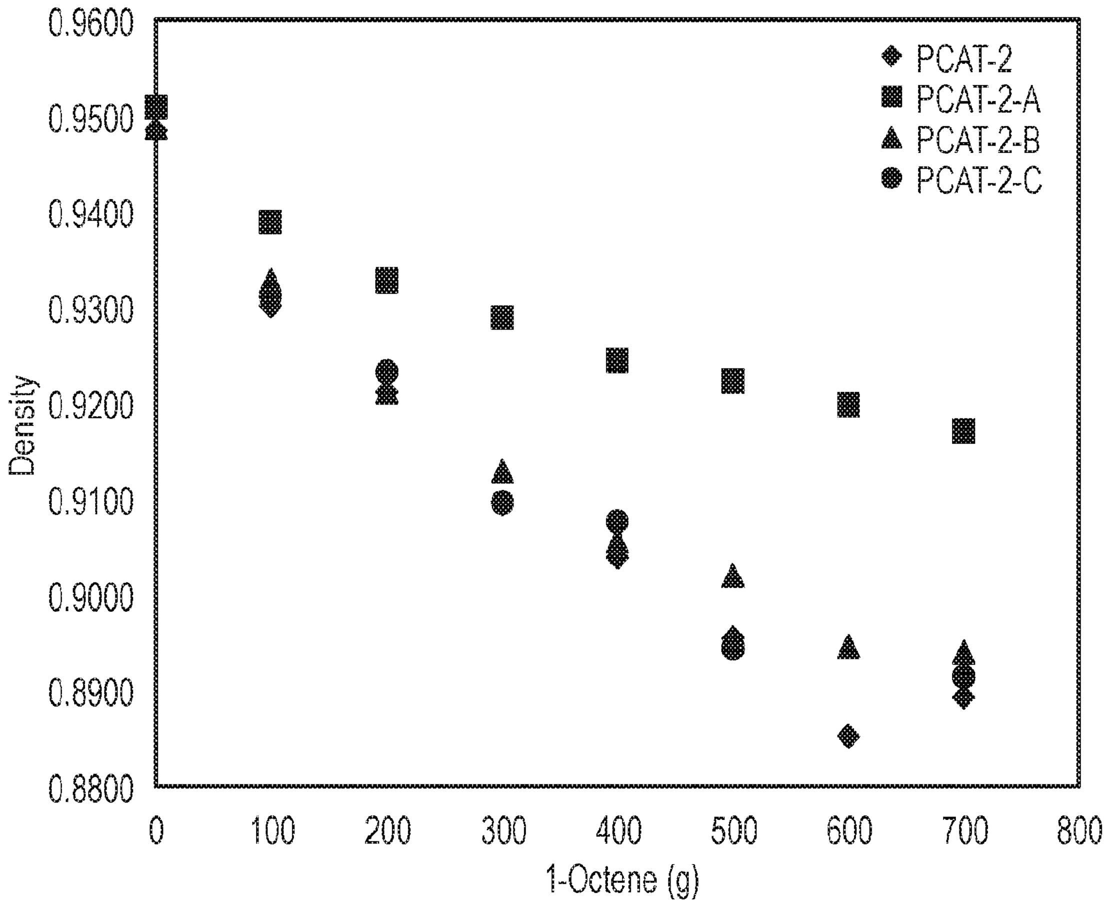
0.9600
0.9500
0.9400
0.9300
0.9200
0.9100
0.9000
0.8900
0.8800
Density
0
100
200
300
400
500
600
700
800
1-Octene (g)
PCAT-2
PCAT-2-A
PCAT-2-B
PCAT-2-C

FIG. 1C

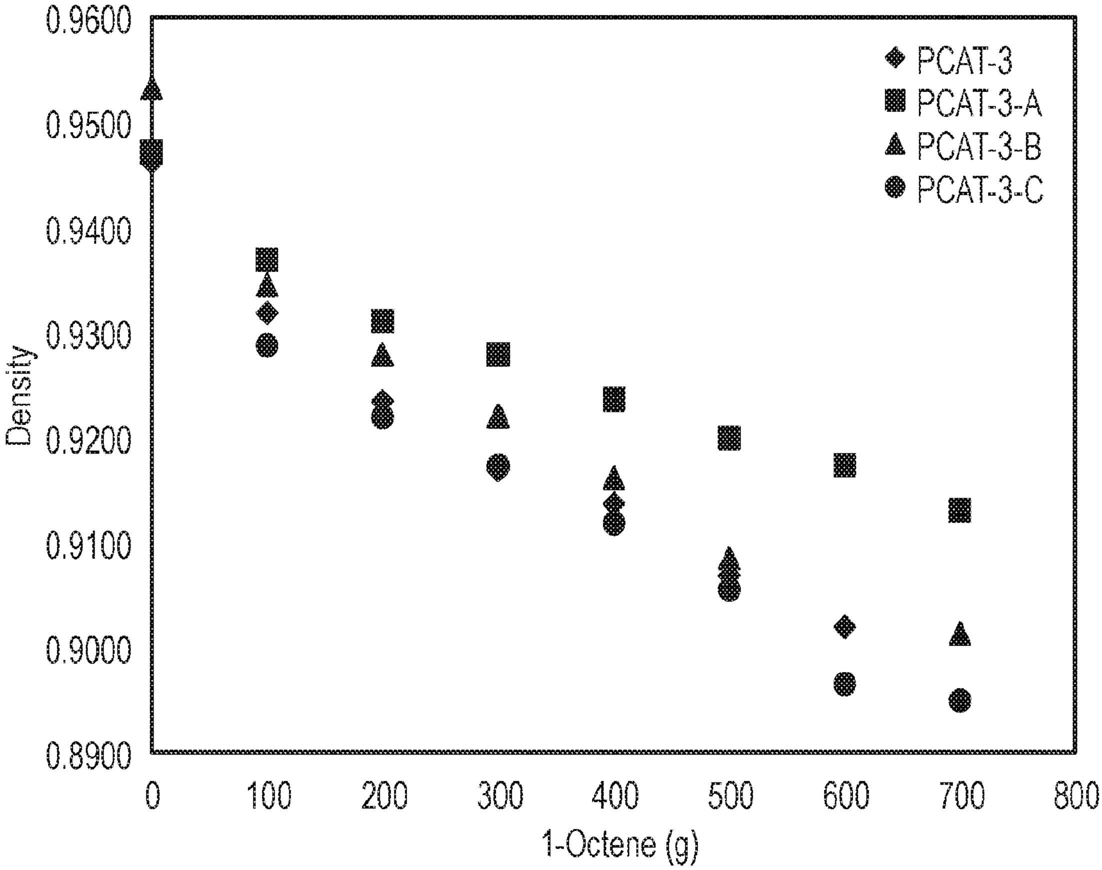
0.9600
0.9500
0.9400
0.9300
0.9200
0.9100
0.9000
0.8900
Density
0
100
200
300
400
500
600
700
800
1-Octene (g)
PCAT-3
PCAT-3-A
PCAT-3-B
PCAT-3-C

FIG. 1D

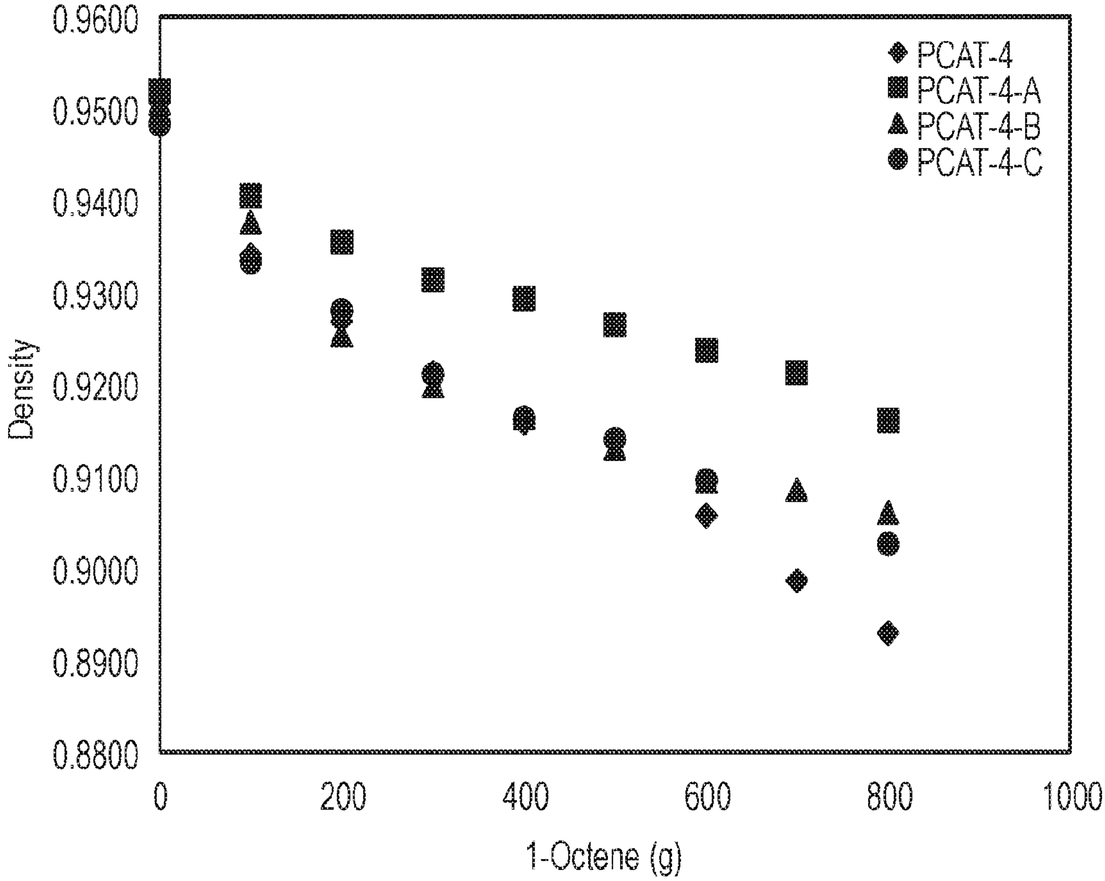
0.9600
0.9500
0.9400
0.9300
0.9200
0.9100
0.9000
0.8900
0.8800
Density
0
200
400
600
800
1000
1-Octene (g)
PCAT-4
PCAT-4-A
PCAT-4-B
PCAT-4-C

FIG. 2A

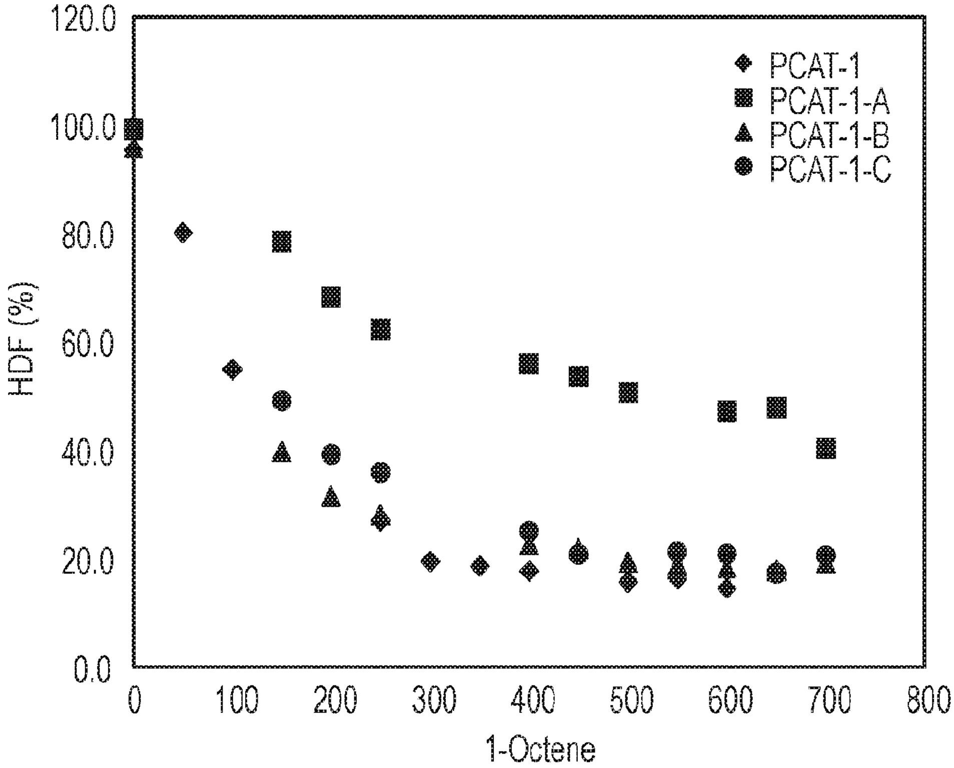


FIG. 2B

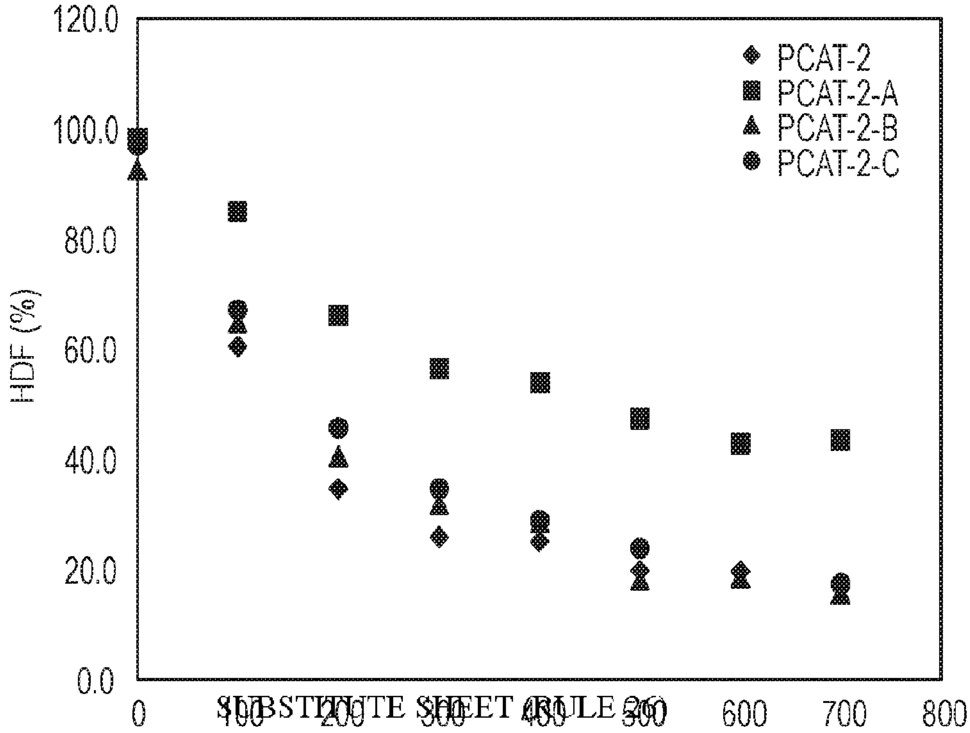


SUBSTITUTE SHEET (RULE 26)

FIG. 2C

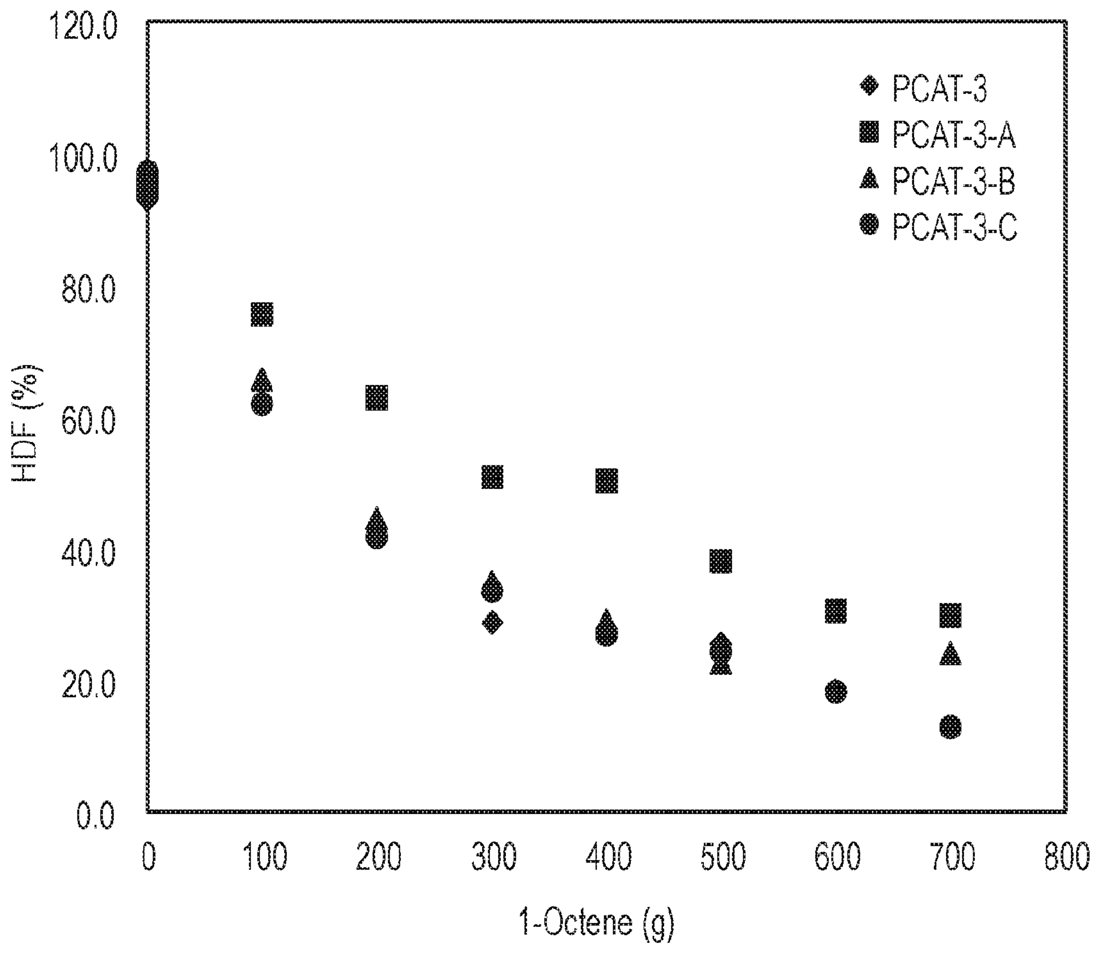
120.0
100.0
80.0
60.0
40.0
20.0
0.0
HDF (%)
0
100
200
300
400
500
600
700
800
1-Octene (g)
PCAT-3
PCAT-3-A
PCAT-3-B
PCAT-3-C

FIG. 2D

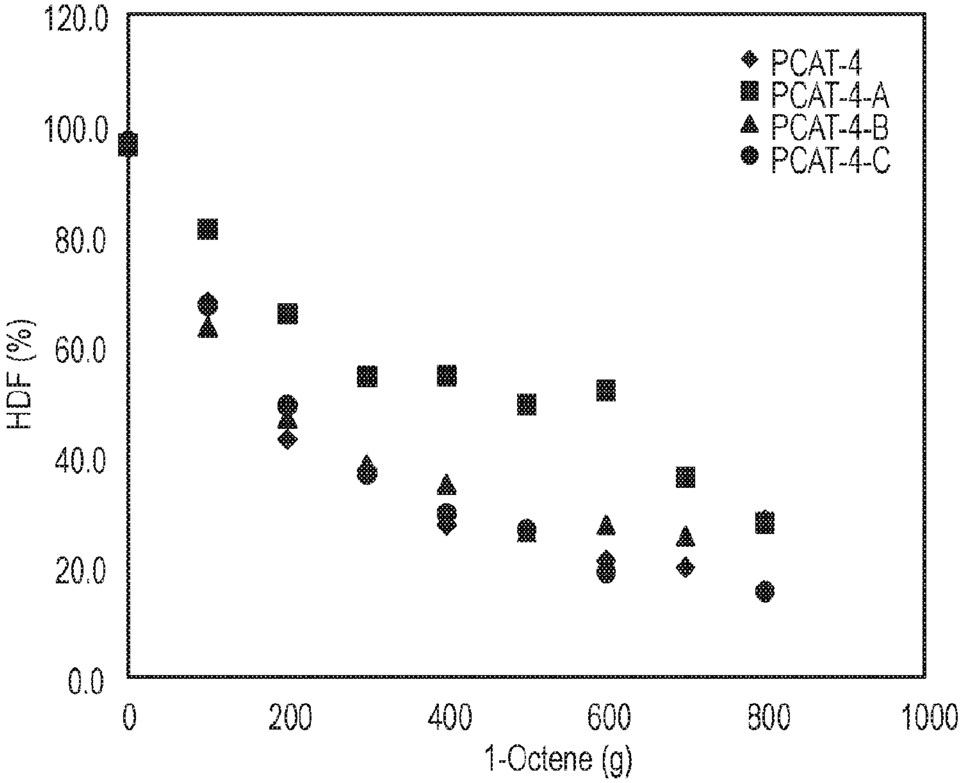
PCAT-4
PCAT-4-A
PCAT-4-B
PCAT-4-C
120.0
100.0
80.0
60.0
40.0
20.0
0.0
HDF (%)
0
200
400
600
800
1000
1-Octene (g)

FIG. 3A

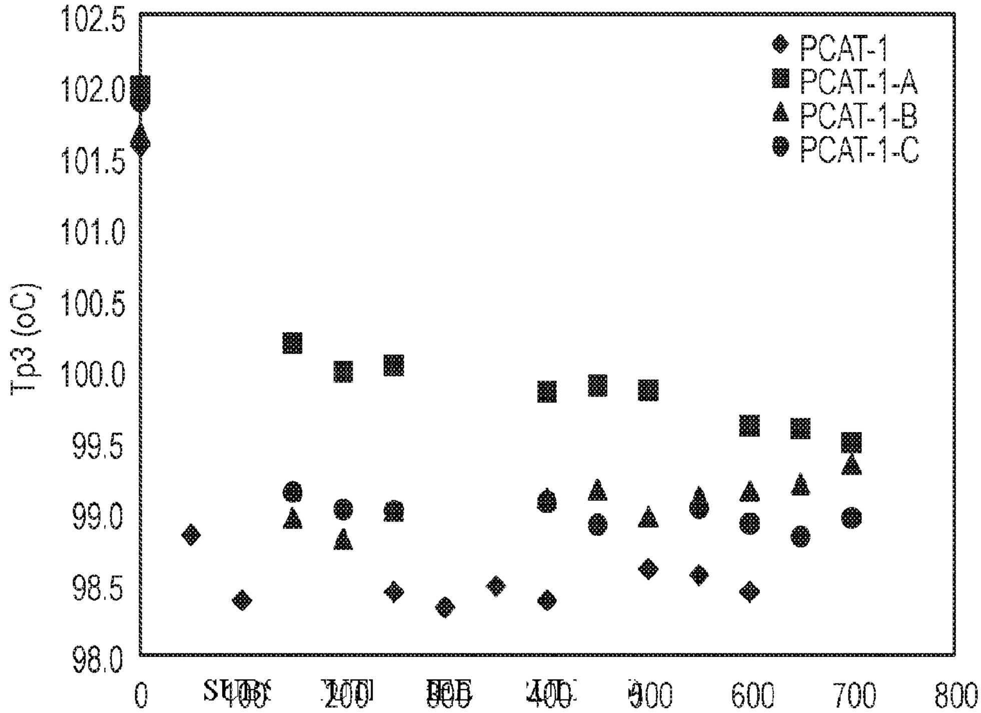
PCAT-1
PCAT-1-A
PCAT-1-B
PCAT-1-C
102.5
102.0
101.5
101.0
100.5
100.0
99.5
99.0
98.5
98.0
Tp3 (oC)
0
100
200
300
400
500
600
700
800

FIG. 3B

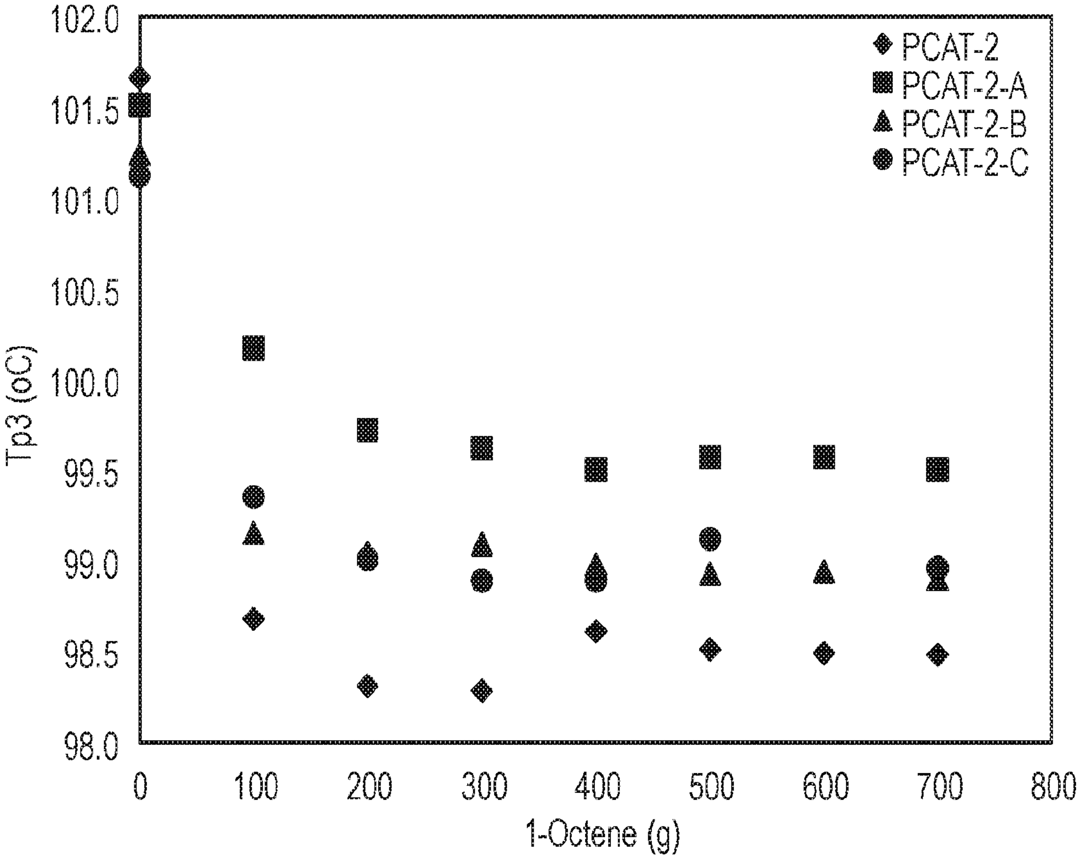
102.0
101.5
101.0
100.5
100.0
99.5
99.0
98.5
98.0
Tp3 (oC)
0
100
200
300
400
500
600
700
800
1-Octene (g)
PCAT-2
PCAT-2-A
PCAT-2-B
PCAT-2-C

FIG. 3C

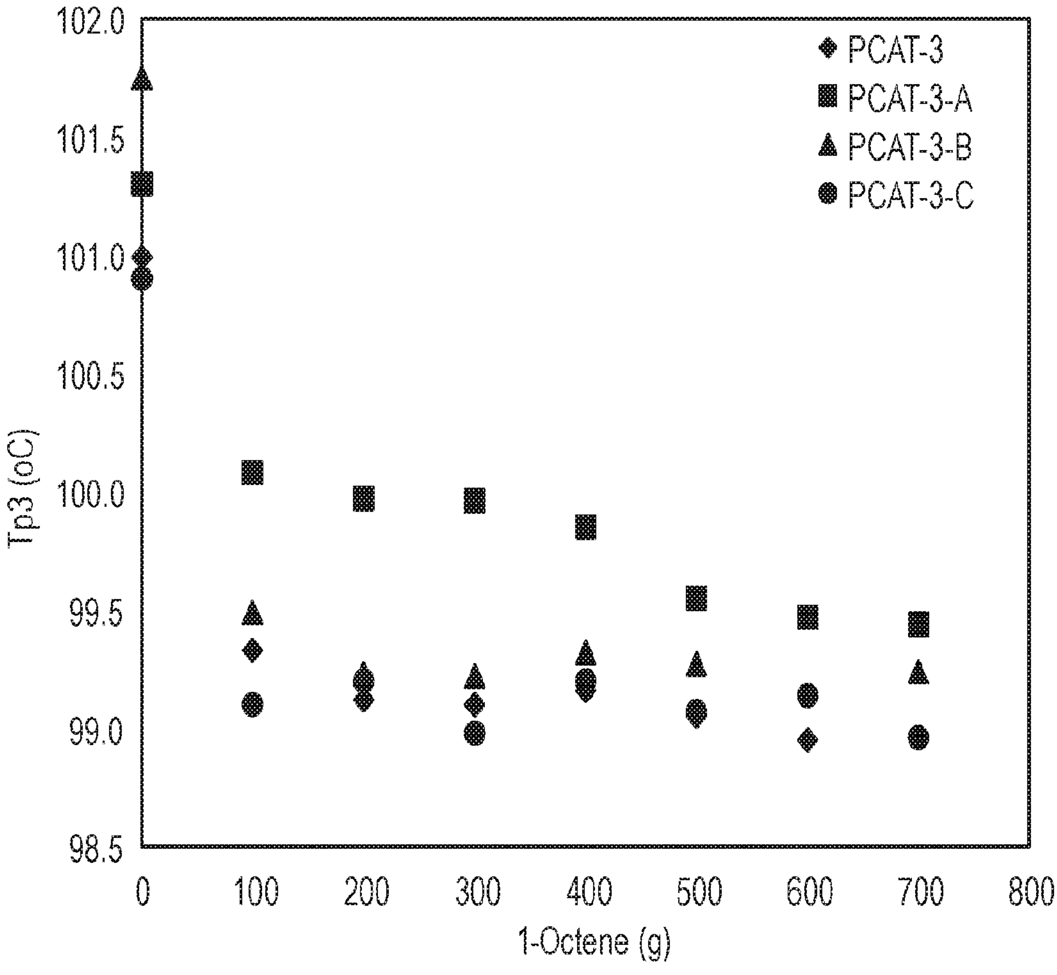

102.0
101.5
101.0
100.5
100.0
99.5
99.0
98.5
Tp3 (oC)
0
100
200
300
400
500
600
700
800
1-Octene (g)
PCAT-3
PCAT-3-A
PCAT-3-B
PCAT-3-C

FIG. 3D

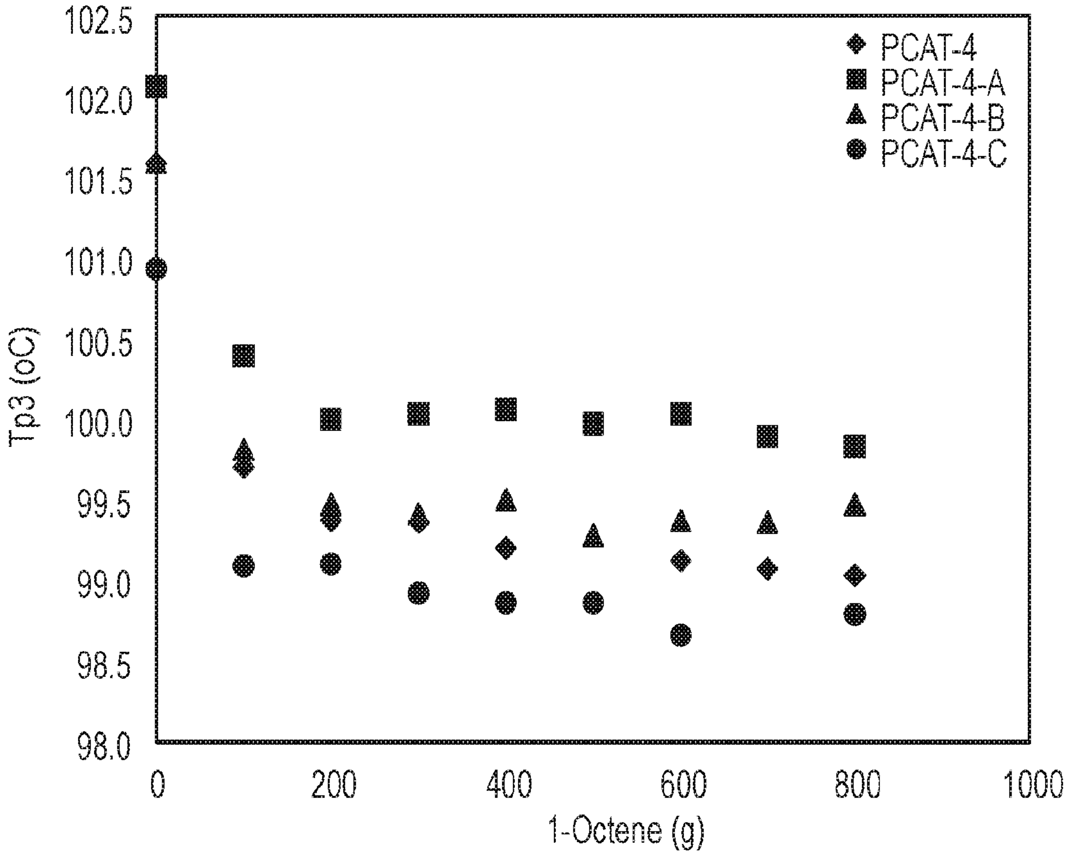

102.5
102.0
101.5
101.0
100.5
100.0
99.5
99.0
98.5
98.0
Tp3 (oC)
0
200
400
600
800
1000
1-Octene (g)
PCAT-4
PCAT-4-A
PCAT-4-B
PCAT-4-C

FIG. 4A

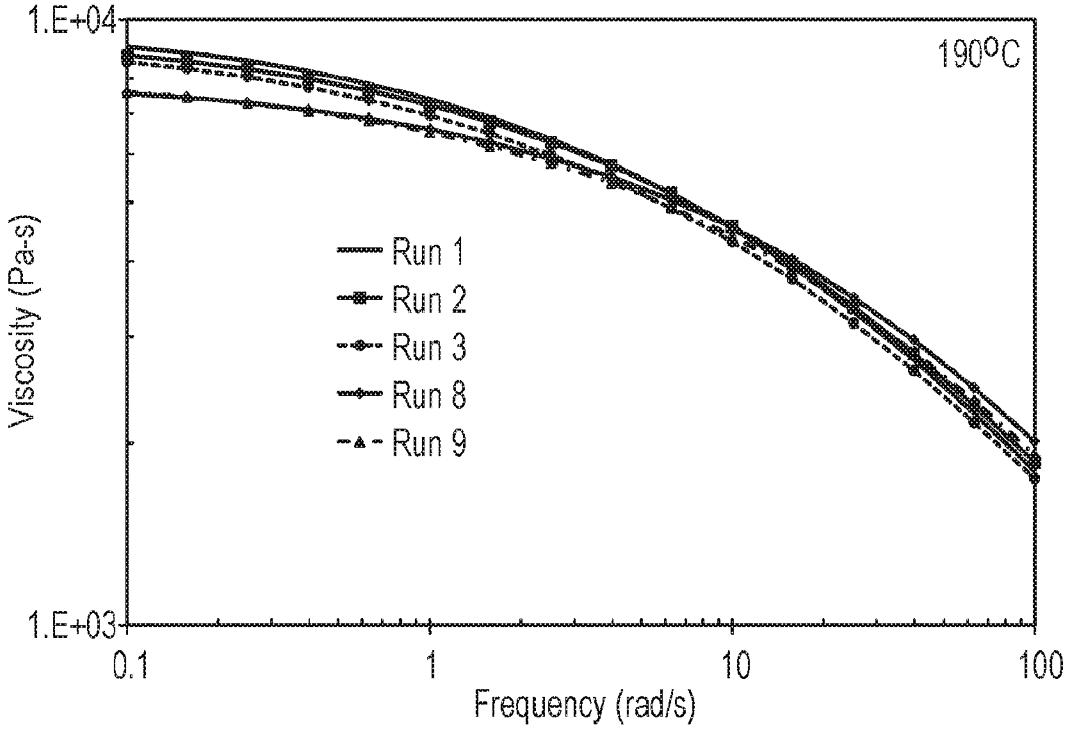
1.E+04
1.E+03
190°C
Viscosity (Pa-s)
Run 1
Run 2
Run 3
Run 8
Run 9
0.1
1
10
100
Frequency (rad/s)

FIG. 4B

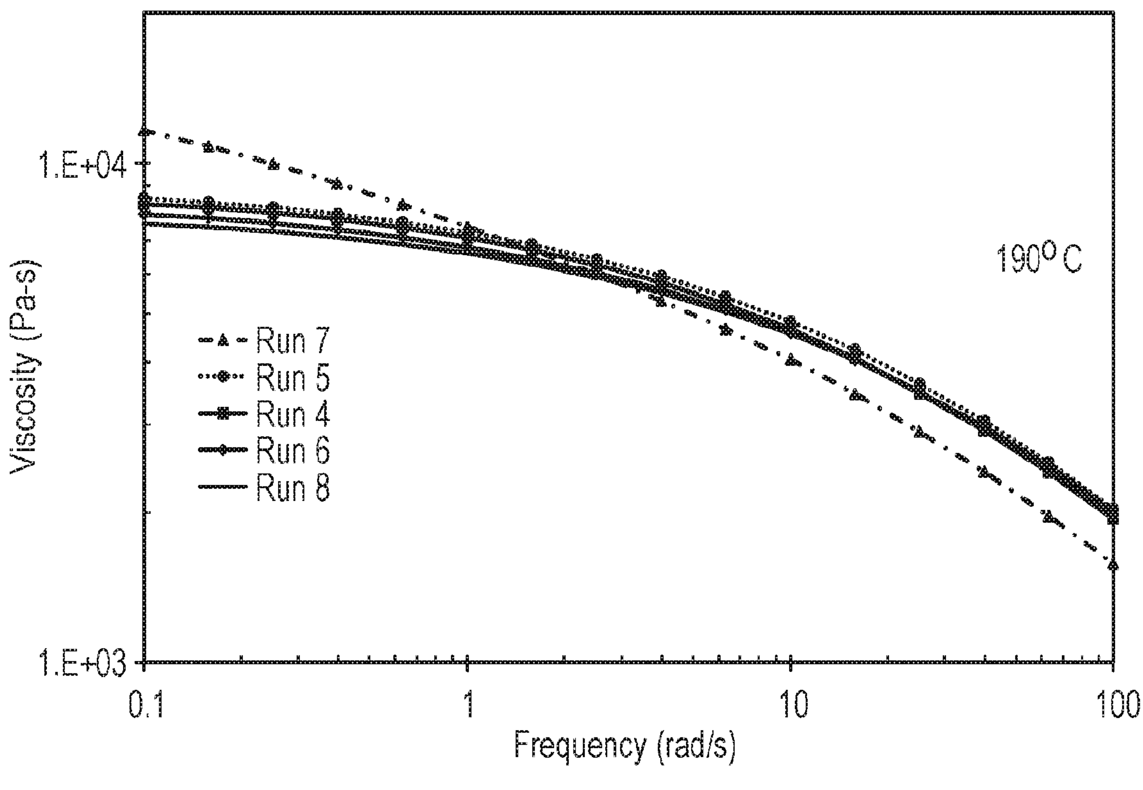
1.E+04
1.E+03
Viscosity (Pa-s)
0.1
1
10
100
Frequency (rad/s)
190° C
Run 7
Run 5
Run 4
Run 6
Run 8

FIG. 4C

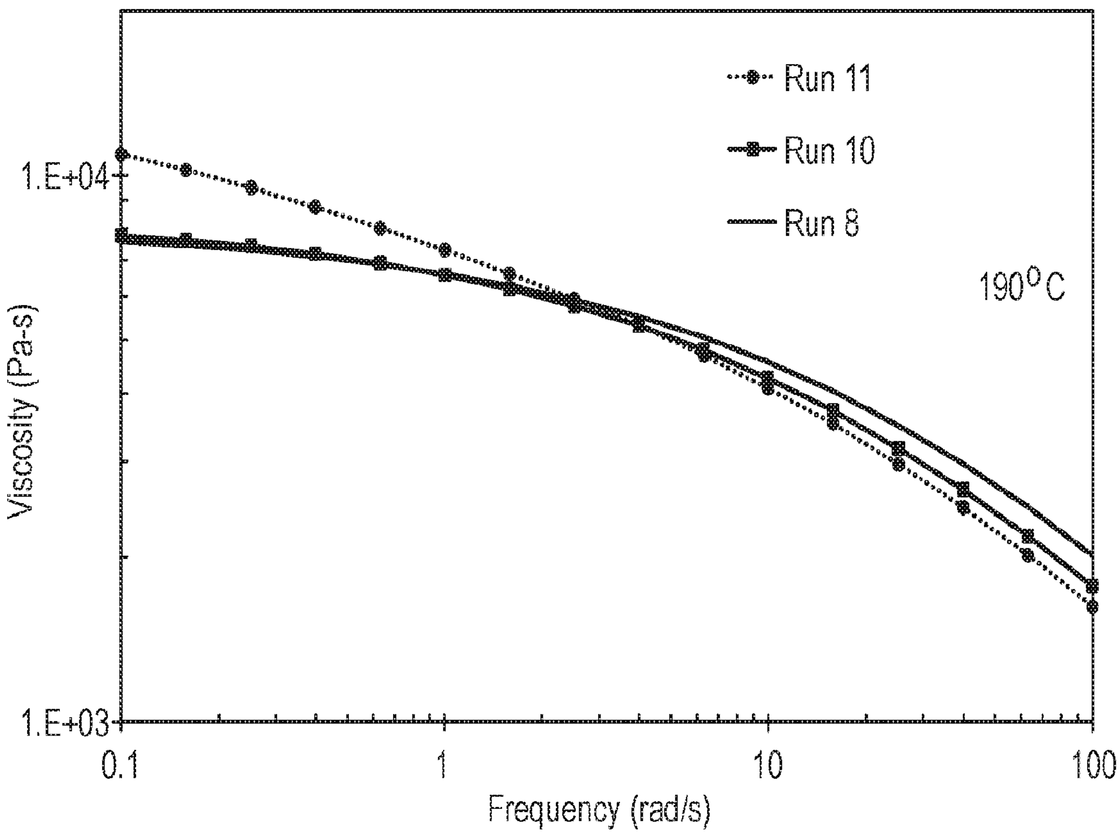

Run 11
Run 10
Run 8
190°C
1.E+04
1.E+03
Viscosity (Pa-s)
0.1
1
10
100
Frequency (rad/s)

Europäisches Patentamt
European Patent Office
Office européen des brevets

# EUROPEAN SEARCH REPORT

Application Number
EP 20 20 9538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 633 270 A1 (SPHERILENE SRL [IT]) 11 January 1995 (1995-01-11) * page 4 - page 5; examples 1,2; table 1 * ----- | 1-3 | INV. C08F210/16 C08F4/651 C08F4/654 C08F4/655 |
| X | EP 0 361 494 A2 (HIMONT INC [US]) 4 April 1990 (1990-04-04) * example 6 * * claim 1 * * tables 3,5 * ----- | 1-3 | |

TECHNICAL FIELDS SEARCHED (IPC)

C08F

The present search report has been drawn up for all claims

1

| Place of search | Date of completion of the search | Examiner |
|---|---|---|
| Munich | 17 February 2021 | Nikolai, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 20 9538

This annex lists the patent family members relating to the patent documents cited in the above-mentioned European search report. The members are as contained in the European Patent Office EDP file on
The European Patent Office is in no way liable for these particulars which are merely given for the purpose of information.

17-02-2021

| Patent document cited in search report | Publication date | Patent family member(s) | Publication date |
|---|---|---|---|
| EP 0633270 A1 | 11-01-1995 | AT 162809 T | 15-02-1998 |
| | | AU 674412 B2 | 19-12-1996 |
| | | BR 9402236 A | 14-03-1995 |
| | | CA 2127308 A1 | 08-01-1995 |
| | | CN 1103406 A | 07-06-1995 |
| | | DE 69408222 T2 | 20-08-1998 |
| | | DK 0633270 T3 | 02-03-1998 |
| | | EP 0633270 A1 | 11-01-1995 |
| | | ES 2113582 T3 | 01-05-1998 |
| | | FI 943237 A | 08-01-1995 |
| | | IL 110215 A | 31-01-2000 |
| | | IT 1264679 B1 | 04-10-1996 |
| | | JP 3682989 B2 | 17-08-2005 |
| | | JP H07145206 A | 06-06-1995 |
| | | KR 960014163 A | 22-05-1996 |
| | | NO 302704 B1 | 14-04-1998 |
| | | RU 2133757 C1 | 27-07-1999 |
| | | US 6300273 B1 | 09-10-2001 |
| | | ZA 944819 B | 22-02-1995 |
| EP 0361494 A2 | 04-04-1990 | AT 133964 T | 15-02-1996 |
| | | AU 616802 B2 | 07-11-1991 |
| | | BR 8904952 A | 08-05-1990 |
| | | CA 1335280 C | 18-04-1995 |
| | | CN 1042547 A | 30-05-1990 |
| | | CZ 280315 B6 | 13-12-1995 |
| | | DE 68925608 T2 | 05-09-1996 |
| | | EP 0361494 A2 | 04-04-1990 |
| | | ES 2085265 T3 | 01-06-1996 |
| | | FI 894626 A | 31-03-1990 |
| | | HU 206734 B | 28-12-1992 |
| | | IL 91690 A | 13-05-1993 |
| | | IN 173341 B | 09-04-1994 |
| | | IT 1227258 B | 28-03-1991 |
| | | JP H03706 A | 07-01-1991 |
| | | JP 2776914 B2 | 16-07-1998 |
| | | KR 900004772 A | 13-04-1990 |
| | | MX 17733 A | 01-12-1993 |
| | | NO 174585 B | 21-02-1994 |
| | | PH 26440 A | 15-07-1992 |
| | | PT 91865 A | 30-03-1990 |
| | | US 4971937 A | 20-11-1990 |
| | | YU 187889 A | 31-12-1990 |
| | | ZA 897445 B | 25-07-1990 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5977251 A
- US 6319989 B
- US 6683149 B
- US 6485662 B
- US 8372931 B
- WO 2007136494 A
- US 59199883 B


### Non-patent literature cited in the description


- **WILLIAMS ; WARD.** *J. Polym. Sci., Polym. Let.,* 1968, vol. 6, 621
- **MONRABAL et al.** *Macromol. Symp.,* 2007, vol. 257, 71-79